Europäisches Patentamt

European Patent Office

Office européen des brevets

(19)

(11) Veröffentlichungsnummer : **0 526 482 B1**

(12) **EUROPÄISCHE PATENTSCHRIFT**

(45) Veröffentlichungstag der Patentschrift :
01.06.94 Patentblatt 94/22

(51) Int. Cl.$^5$ : **B60T 13/66**

(21) Anmeldenummer : 91907529.1

(22) Anmeldetag : 18.04.91

(86) Internationale Anmeldenummer :
PCT/DE91/00318

(87) Internationale Veröffentlichungsnummer :
WO 91/16222 31.10.91 Gazette 91/25

(54) ADAPTIVE BREMSSTEUERUNG.

(30) Priorität : 26.04.90 DE 4013278

(43) Veröffentlichungstag der Anmeldung :
10.02.93 Patentblatt 93/06

(45) Bekanntmachung des Hinweises auf die
Patenterteilung :
01.06.94 Patentblatt 94/22

(84) Benannte Vertragsstaaten :
AT CH DE ES FR GB LI SE

(56) Entgegenhaltungen :
EP-A- 0 278 928
FR-A- 2 449 574
FR-A- 2 521 508
US-A- 4 859 000

(73) Patentinhaber : KNORR-BREMSE AG
Postfach 40 10 60
D-80710 München (DE)

(72) Erfinder : EWE, Ulrich
Kennedystr. 10
D-8039 Puchheim (DE)
Erfinder : SAUMWEBER, Eckart
Mühlstr. 15
D-8035 Gauting (DE)

## Beschreibung

Die Erfindung bezieht sich auf eine adaptive Bremssteuerung für indirekt wirkende Druckluftbremsen mit einem elektro-pneumatischen Führerbremsventil gemäß dem Oberbegriff des Patentanspruches 1.

Die US-PS 4,859,000 zeigt eine adaptive Bremssteuerung mit einem elektro-pneumatischen Führerbremsventil und einem Relaisventil. In der Strömungsverbindung zwischen dem Relaisventil und einer Hauptluftleitung (im folgenden HL genannt) sind drei Meßfühler angeordnet, die die Strömungsgeschwindigkeit, den absoluten Druck und die Temperatur der Luft messen. Weitere Druckfühler am Führerbremsventil messen den Druck eines Steuerdruckbehälters für das Relaisventil (A-Druck) und den Druck im Führerbremsventil für die Bremsdruckanforderung. Die Ausgangssignale aller dieser Meßfühler werden einem Mikroprozessor zugeführt und ausgewertet. Primär wird das Volumen der beim Bremsen aus der HL über das Relaisventil zur Atmosphäre abströmenden bzw. beim Lösen der Bremsen über das Relaisventil in die HL einströmenden Luft gemessen.

Beim Zusammenstellen eines neuen Zuges wird ausgehend von einer vollständig entlüfteten HL das Volumen der eingespeisten Luft bis zum vollständigen Lösen des Zuges gemessen und der Wert gespeichert. Bei einem späteren vollständigen Entlüften wird dann verglichen, ob dasselbe Volumen abgeströmt ist. Umgekehrt kann mit diesem Vergleichswert später auch festgestellt werden, ob die Bremsen vollständig gelöst sind. Bei jeglichen Brems- und Lösemanövern wird immer das beim Einbremsen aus der HL abströmende Volumen mit dem beim Lösen in die HL einströmenden Volumen verglichen, woraus Änderungen der Zug-Konfiguration (z.B. versehentliches Schließen eines Absperrventiles an einem Wagen) oder sonstige Störfälle erkannt werden können. Weiter befaßt sich diese Schrift ausführlich mit dem Problem eines erneuten Einbremsens zu einem Zeitpunkt, zu dem die Bremsen noch nicht vollständig gelöst sind, also noch Luft in die HL nachgespeist wird. In einem solchen Fall ist der Steuerdruckbehälter (A-Behälter) schon auf den Druck für das neue Bremsanforderungssignal gefüllt, während der Druck in der HL noch unter diesem Wert liegt. Durch erneutes Einbremsen in der Lösephase wird der Druck im A-Behälter entsprechend der gewählten Bremsstufe relativ schnell abgesenkt. Die Steuerventile der einzelnen Wagen sprechen dann auf die Druckdifferenz zwischen dem aktuellen Druck im A-Behälter und der HL-Leitung an, was zu keinem Einbremsen oder nur zu einem Einbremsen mit einer kleineren als der gewählte Bremsstufe führt. Zur Lösung dieses Problems wird bei dieser Druckschrift der Wert des Druckes im A-Behälter zu dem Zeitpunkt gespeichert, zu dem die Durchflußgeschwindigkeit der nachgespeisten Luft in die HL gegen Null geht. Zu diesem Zeitpunkt sind die Drücke im A-Behälter und der HL in etwa gleich. Für die dann erfolgende Bremsung wird der Wert des Druckes im A-Behälter korrigiert entsprechend der Differenz zwischen dem Regelbetriebsdruck im A-Behälter und dem gespeicherten Wert. Für die nachfolgende Bremsung wird dann also von einem geringeren A-Druck ausgegangen, so daß die für die Bremsung erforderliche effektive Druckabsenkung in der HL der angeforderten Bremsstufe entspricht.

Dieses bekannte System setzt voraus, daß in den einzelnen Wagen keine Luft verbraucht wird, vielmehr stets das beim Bremsen aus der HL abströmende Luftvolumen gleich dem zum nachfolgenden vollständigen Lösen erforderlichen Luftvolumen ist. Diese Forderung ist aber bei den nach UIC-Norm gefertigten Bremsanlagen nicht erfüllt, da die beim Bremsen aus den Vorratsluftbehältern (im folgenden R-Behälter) in den einzelnen Wagen zu den Bremszylindern strömende Luft beim Lösen nicht mehr in die R-Behälter oder die HL zurückfließt sondern ins Freie entlüftet wird. Jeder Brems- und Lösezyklus hat damit einen Luftverbrauch zur Folge. Dieser Luftverbrauch hängt von der Zuglänge (Anzahl der Bremszylinder), der gewählten Bremsstufe eventuellen Undichtigkeiten der Bremsanlage und indirekt auch von dem Zuggewicht ab. Änderungen der Zuglänge durch An- oder Abkuppeln von Wagen können nur dann richtig berücksichtigt werden, wenn der Zug in der neuen Konfiguration vollständig entlüftet (gebremst) und dann wieder gelöst wird. Auch würden bei dem bekannten System kleinere Lecks der HL, die zumindest nach UIC-Norm ohne weiteres hingenommen werden können, zu Fehlermeldun- gen oder gar zu Fehlfunktionen führen.

In der DE-Zeitschrift ETR 37 (1988), H. 1/2, S. 37-43 ist eine elektronische Bremssteuerung für Schienenfahrzeuge beschrieben, bei dem ein Differenzdruckaufnehmer verwendet wird, um den Massen- oder Volumenstrom der in die HL strömenden Luft zu bestimmen. Zum schnelleren Lösen wird dort der HL-Druck-Sollwert gezielt überhöht in Abhängigkeit der vorangegangenen Einbremsung, der Eigenzeit der Ventile und dem Verlauf der Nachspeisung. Der aktuelle A-Druck-Sollwert am ersten Wagen ergibt sich aus dem HL-Druck-Sollwert korrigiert um einen Wert, der den Druckabfall zwischen Meßort und dem Steuerventil im ersten Wagen bei dem momentanen Luftdurchsatz in der HL berücksichtigt.

Ein ähnliches Führerbremsventil ist in der EP-A-0.152.958 beschrieben. Dort ist ein Strömungssensor in Form eines Differenzdruckmessers in der Nachspeiseleitung (HB-Leitung) vorgesehen und ein Druckmesser in der HL. Ein Sollwertsignal für den Vorsteuerdruck wird aufgrund dieser Meßgrößen korrigiert, womit der HL-Druck auf den Druck am ersten Steuerventil des ersten Wagens transformiert werden kann. Hierdurch

2

EP 0 526 482 B1

wird der HL-Druck in Abhängigkeit von der Leitungslänge erhöht und die Länge des Füllstoßes an die Leitungslänge angepaßt. Diese Anpassung ist aber noch recht unpräzise.

Aufgabe der Erfindung ist es daher, das Führerbremsventil der eingangs genannten Art dahingehend zu verbessern, daß die Lösezeiten weiter verkürzt werden können.

Diese Aufgabe wird durch die im kennzeichnenden Teil des Patentanspruches 1 angegebenen Merkmale gelost. Vorteilhafte Ausgestaltungen und Weiterbildungen der Erfindung sind den Unteransprüchen zu entnehmen.

Das Grundprinzip der Erfindung besteht darin, mit elektronischen Mitteln eine "Zugnachbildung" einzusetzen, die aus Meßgrößen

- des Volumen- oder Massestromes der in die HL beim Lösen nachgespeisten Luft,
- des aktuell in der HL gemessenen Drucks und
- der Betätigung eines Bremsbedienorganes durch den Lokführer

Signale erzeugt, die den zeitlichen Verlauf der beim Lösen gewünschten Drucküberhöhung bestimmen. In diesem elektronischen Zugmodell werden rechnerisch Verläufe des HL-Druckes und des R-Druckes nachgebildet bzw. simuliert und ggf. auch des C-Druckes (Bremszylinderdruck in den einzelnen Bremszylindern) und hieraus ein Wert ermittelt, der jeweils aktuell ein Maß für das noch in die HL nachzufüllende Luftvolumen angibt. Aus diesem Wert läßt sich dann adaptiv auch die tatsächliche Zuglänge (Volumen der gesamten HL-Leitung des Zuges und Volumina aller R-Behälter) bestimmen. Umgekehrt können hierüber auch Betriebs- bzw. Störungszustände, wie Undichtigkeiten, Zugtrennung, Notbremsung, fehlerhaft geschlossene Absperrventile etc. festgestellt und teilweise auch voneinander unterschieden werden.

Im folgenden wird die Erfindung anhand eines Ausführungs- beispieles im Zusammenhang mit der Zeichnung ausführlicher erläutert. Es zeigt:

| Fig. 1 | ein Diagramm des zeitlichen Verlaufes verschiedener tatsächlicher und nachgebildeter Drücke der Bremsanlage; |
| --- | --- |
| Fig. 2 | den zeitlichen Verlauf der Drucküberhöhung, die dem Vorsteuerdruck während eines Lösevorganges überlagert wird; |
| Fig. 3 | ein Diagramm der Abhängigkeit eines Parameters der Drucküberhöhung von dem Wert VSZUG des bei einem Lösevorgang noch nachzuspeisenden Luftvolumens; |
| Fig. 4 | ein Blockschaltbild eines Teiles der Bremssteuerung zur Erläuterung der Bildung des Sollwertes für den Vorsteuerdruck (A-Druck); |
| Fig. 5 | ein Prinzipschaltbild der Bremssteuerung zur Erläuterung der Eingangs- und Ausgangsgrößen des elektronischen Zugmodelles; |
| Fig. 6 | ein detailierteres Blockschaltbild des Zugmodelles; |
| Fig. 7 | eine Grobstruktur eines Flußdiagrammes zur Erläuterung der Arbeitsweise des Blockschaltbildes der Fig. 6; |
| Fig. 8 | ein detailierteres Blockschaltbild der Teile des Zugmodelles, in dem bestimmte Druckverläufe nachgebildet werden; |
| Fig. 8a | ein Blockschaltbild ähnlich Fig. 8 der Teile des Zugmodelles, in dem bestimmte Druckverläufe nachgebildet werden gemäß einer Modifikation der Erfindung; |
| Fig. 9 | ein weiteres Blockschaltbild zur Erläuterung der Nachbildung weiterer Druckverläufe; |
| Fig. 10 | ein detailierteres Blockschaltbild der Teile der Bremssteuerung, die die Überhöhungswerte für den Vorsteuerdruck beim Lösen ermitteln; |
| Fig. 11 | ein Blockschaltbild der Teile der Bremssteuerung, die den adaptiven Lernprozeß durchführen; |
| Fig. 12a und 12b | ein detailierteres Flußdiagramm zur Erläuterung der Arbeitsweise des Zugmodelles; |
| Fig. 13 | ein Flußdiagramm zur Erläuterung der vom Zugmodell durchgeführten Volumenintegration; |
| Fig. 14a bis 14c | ein detailierteres Flußdiagramm zur Erläuterung des adaptiven Lernprozesses; und |
| Fig. 15 | ein Flußdiagramm zur Erläuterung der Arbeitsweise der Bremssteuerung beim Erkennen einer Zugtrennung. |

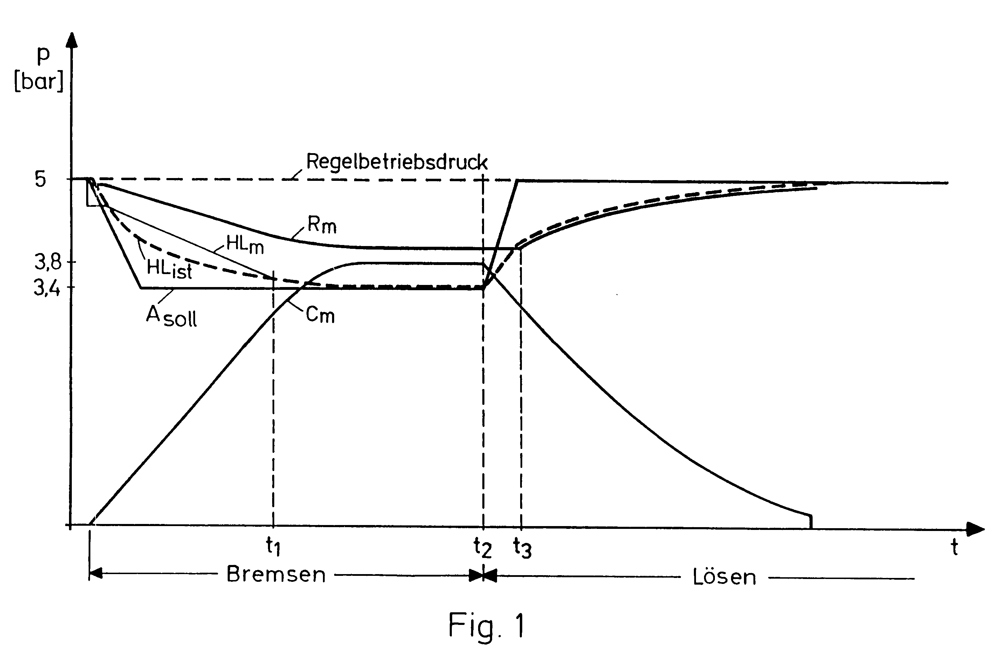

Anhand des Diagrammes der Fig. 1 wird zunächst die grundlegende Arbeitsweise des elektronischen "Zugmodells" erläutert. Das Diagramm der Fig. 1 zeigt verschiedene zeitlich Verläufe von Drücken bei einem Bremsvorgang. In Abhängigkeit von der Betätigung eines Bedienorganes (z.B. Stellung und Zeitdauer des Anliegens der Stellung eines Bremshebels oder Zeitdauer der Betätigung eines Tasters) wird mit elektronischen Mitteln ein Sollwert $A_{Soll}$ für den Vorsteuerdruck des Relaisventiles gebildet. Einzelheiten dieser Sollwert-Bildung sind in der eingangs genannten EP-A-0.152.958 beschrieben. Generell sinkt beim Einbremsen dieser Wert ausgehend von einem Regelbetriebsdruck von z.B. 5 bar zeitlinear ab, bis der Sollwert der gewählten Bremsstufe erreicht ist. Sodann wird dieser Wert solange konstant gehalten, bis eine andere Bremsstufe bzw.

3

ein Lösen der Bremsen gewählt wird.

Über einen elektro-pneumatischen Wandler wird der pneumatische Vorsteuerdruck dem Wert $A_{Soll}$ nachgeführt. Das Relaisventil führt dann mit zeitlicher Verzögerung den HL-Druck dem Wert $A_{Soll}$ nach.

Bremsen: HL-Druckabbau, R-Druckabbau/ C-Druckaufbau

Der HL-Druck sinkt dabei nach einer e-Funktion ab, entsprechend der Kurve $HL_{ist}$ der Fig. 1. Bei der Erfindung wird der HL-Druck durch einen Druckaufnehmer gemessen und als elektrisches Signal $HL_{ist}$ dem "Zugmodell" als Eingangswert zur Verfügung gestellt. Im Zugmodell wird eine Nachbildung $HL_m$ des HL-Druckes gebildet. Ausgehend von dem Regelbetriebsdruck wird zunächst zur Nachbildung eines Ansprungverhaltens der Wert von $HL_m$ um einen konstanten Wert $dHL_1$ reduziert. $dHL_1$ liegt dabei beispielsweise bei 400 mbar. Von diesem Wert verläuft $HL_m$ linear mit einem Gradienten (Steigung), der umgekehrt proportional dem gesamten Volumen der HL ist. Dieses Volumen wird zur Vereinfachung der Rechnung in ganzzahlige Blöcke unterteilt, so daß dann der Gradient von $HL_m$ umgekehrt proportional der Anzahl von HL-Blöcken AHI ist. Durch diese Steigungskonstante wird dafür gesorgt, daß in der Anfangsphase des Bremsens der Wert von $HL_m$ größer als der tatsächliche Wert $HL_{ist}$ ist. Ab dem Schnittpunkt der beiden Kurven $HL_m$ und $HL_{ist}$, wird $HL_m$ von $HL_{ist}$ nachgeführt, was rechnerisch durch eine Maximumabfrage erfolgt. Zusätzlich wird laufend der Minimalwert $HL_{min}$ von $HL_m$ gespeichert und zu bestimmten Zeitpunkten in einem adaptiven Lernprozeß ausgewertet.

Ein Solldruck $C_{soll}$ für den Bremszylinderdruck wird in Abhängigkeit von der augenblicklichen HL-Druckabsenkung dHL und dem maximal möglichen C-Druck $C_{max}$ ermittelt, dem im Zugmodell der Istwert des C-Druckes $C_m$ über ein Zeitglied nachgeführt wird. Sollten die R-Behälter erschöpft sein, so wird $C_m$ bis zum maximal möglichen R-Druck $R_{max}$ aufgebaut, womit ein Druckausgleich erreicht ist. Es gelten folgende Beziehungen:

$$dHL = UREFge - HL_m; )$$
$$C_{soll} = MIN (C_{max}, (dHL * 3 - 0,4 bar)).$$

Der maximal mögliche Aufbaugradient für $C_m$ wird auf einen konstanten Wert von beispielsweise 0,666 bar/s begrenzt. Somit ist der Verlauf des simulierten C-Druckes eine Funktion des Aufbaugradienten und des maximal möglichen Druckes $R_{max}$ in den R-Behältern.

Aus dem C-Druckverlauf des Modells wird dann der Verlauf des Druckes in den R-Behältern bestimmt. Abgesehen von Änderungen durch Verschleiß stehen die Volumina der Bremszylinder und der R-Behälter bei einem zusammmengestellten Zug in einem konstanten Verhältnis $F_1$ zueinander (z.B. Faktor 5), das je nach Art der Wagen verschieden sein kann. Demnach ruft ein C-Druckanstieg $dC_m$ einen proportionalen R-Druckabfall $dR_m$ hervor. Für den R-Druckabfall muß daher keine spezielle Zeitfunktion vorgegeben werden, wenn er mit dem C-Druckaufbau gekoppelt wird. Es gelten folgende Beziehungen:

$$dR_m = f (dC_m) = dC_m/F_1 ;$$
$$R_m (neu) = R_m (alt) - dR_m.$$

Der minimal erreichte R-Druck $R_{min}$ wird ebenfalls gespeichert und im Lernprozeß ausgewertet.

Lösen: HL- und R-Druckaufbau/C-Druckabbau

Im folgenden wird ein Lösevorgang im Anschluß an einen Bremsvorgang beschrieben. Hier gelten folgende Grundüberlegungen:

Solange der simulierte HL-Druck $HL_m$ unter dem simulierten R-Druck $R_m$ liegt, wird das gesamte einströmende Luftvolumen ausschließlich in die HL nachgefüllt. Erst wenn der HL-Druck $HL_m$ um einen vorgegebene Betrag $dR_2$ geringfügig größer (z.B. 30 mbar) als der R-Druck $R_m$ ist, können die R-Behälter aus der HL gespeist werden und der R-Druck $R_m$ wird dann mit dem HL-Druck $HL_m$ mitgeführt. (Voraussetzung ist dabei, daß die Bremsdruckanforderung UREF größer als der simulierte R-Druck $R_m$ ist.) Ab diesem Zeitpunkt teilt sich das nachgespeiste Luftvolumen also auf die HL und die R-Behälter auf. Anhand dieses Kriteriums kann man unterscheiden, ob nur die HL oder gemeinsam die HL und die R-Behälter nachgefüllt werden.

Bei einem Lösevorgang werden folgende Größen bestimmt:
- Tatsächlich nachgespeistes Luftvolumen ($\Sigma V$);
- noch nachzuspeisendes Luftvolumen (VSZUG), um die Drücke $HL_m$ und $R_m$ auf den geforderten Sollwert (UREF oder UREFge) anzuheben.

Beim Lösen wird im Zugmodell der Druckaufbau in HL basierend auf dem Meßwert für das nachgefüllte Luftvolumen bestimmt. Die HL-Blocklänge ist so gewählt, daß für eine Druckerhöhung von $HL_m$ um einen bestimmten Betrag von z.B. 10 mbar ein Volumen von 1 l entspannter Luft benötigt wird. Jedesmal, wenn der Meßfühler für den Differenzdruck an der Blende im Zusammenhang mit der Volumenintegration feststellt, daß bei der vorgegebenen Anzahl von HL-Blöcken das Volumen zur Erhöhung des HL-Druckes um den vorgegebenen Betrag von z.B. 10 mbar eingeströmt ist, wird der Wert von $HL_m$ um diesen Betrag heraufgesetzt. Sobald $HL_m$ den im Modell noch gespeicherten Druck $R_m$ um $dR_2$ überschritten hat und die Bedingung UREF > $R_m$ erfüllt ist, der R-Druck somit von dem HL-Druck mitgeführt wird, wird im Modell auch der R-Druck angehoben, in Abhängigkeit vom gemessenen Volumen- oder Massestrom und der Anzahl der R-Behälter. Ab diesem Moment laufen $HL_m$ und $R_m$ parallel um $dR_2$ versetzt und mit einem insgesamt flacheren Verlauf, da nun mehr Luft benötigt wird, um den Druck in dem Gesamtvolumen von HL- und R-Behältern anzuheben.

Der C-Druckabbau im Modell erfolgt in Abhängigkeit vom zeitlichen Verlauf von $C_{soll}$, das eine Funktion von dHL ist. dHL ist dabei die Differenz zwischen dem HL-Druck vor Bremsbeginn minus dem aktuellen $HL_m$. Theoretisch folgt $C_m$ dem Wert $C_{soll}$ nach einer e-Funktion unter Berücksichtigung der Eigenzeit der Ventile. Im Modell wird diese e-Funktion durch vier Geraden nachgebildet.

Aufgrund des HL-Druckanstieges $HL_m$ wird ein neuer Bremszylindersolldruck $C_{soll}$ ermittelt. Der aktuelle Bremszylinderdruck $C_m$ wird - wie beim Einbremsen - dem Sollwert $C_{soll}$ über ein Zeitglied nachgeführt. Dieses Zeitglied nähert die Eigenzeit eines Bremsventiles am einzelnen Wagen in einem Ausführungsbeispiel durch vier lineare Geraden an. Die Eigenzeit gibt dabei die schnellstmögliche Änderung des Bremszylinderdruckes an. Für den C-Druckabbau stehen also vier verschiedene Gradienten zur Verfügung, je nachdem, in welchem absoluten Bereich der Wert $C_m$ liegt. In einem Ausführungsbeispiel werden folgende Gradienten verwendet:

1. $C_m$-Gradient = 0,311 bar/s, wenn

    3,8 bar >= $C_{m > 2,4\,bar;}$

2. $C_m$-Gradient = 0,2 bar/s, wenn

    2,4 bar >= $C_{m > 1,4\,bar;}$

3. $C_m$-Gradient = 0,133 bar/s, wenn

    1,4 bar >= $C_{m > 0,7\,bar;}$

4. $C_m$-Gradient = 0,1 bar/s, wenn

    0,7 bar >= $C_{m > 0,2\,bar.}$

Sinkt der Bremszylinderdruck $C_m$ unter einen vorgegebenen Wert (im Beispiel 0,2 bar), wird die Bremse als gelöst betrachtet und $C_m$ auf Null gesetzt.

Volumenintegration, nachzuspeisendes Volumen

Das tatsächlich nachgespeiste Luftvolumen $\Sigma V$ wird durch Volumenintegration aus dem Meßwert des Strömungssensors (Differenzdruckmessung), der die zur HL nachgespeiste Luft überwacht, bestimmt. In einem konkreten Ausführungsbeispiel sind beidseitig einer Strömungsblende bzw. Drosselstelle getrennte Druckaufnehmer vorgesehen. Aus der Differenz der Meßwerte dieser beiden Druckaufnehmer läßt sich das durchgeströmte Luftvolumen (bzw. der Luft-Massestrom) bestimmen, wenn die übrigen Parameter bekannt sind. Das pro Zeiteinheit (Zeittakt) eingeströmte Volumen entspannter Luft dV ist eine Funktion dieser Druckdifferenz und des Speisedruckes HB aus dem Hauptbehälter. Nach der Erfindung können auch sonstige bekannte Meßaufnehmer verwendet werden, mit denen ein Volumen- oder Massestrom eines strömenden Gases bestimmt werden kann. In einem Ausführungsbeispiel ist eine Eichkurve für das Differenzsignal der beiden Druckaufnehmer in einer Tabelle gespeichert, wobei ggf. als Parameter der HB-Druck gewählt wird. Je nach Aufwand können auch mehrere Eichkurven für verschiedene HB-Drücke gespeichert sein. Unter Steuerung eines Zeittaktes kann dann der gemessene Differenzdruck direkt in ein eingeströmtes Volumen entspannter Luft dV umgerechnet werden.

Zur Ermittlung des noch benötigten nachzuspeisenden Volumens VSZUG werden in dem elektronischen Zugmodell entweder der Druckaufbau des HL-Druckes oder der Druckaufbau des HL-Druckes in Kombination mit dem Druckaufbau des R-Druckes ermittelt. Mit dem Lösevorgang wird der A-Kammersolldruck UREF angehoben. Handelt es sich dabei um ein Teillösen, muß geprüft werden, ob der neue A-Kammersolldruck über dem aktuellen R-Behälterdruck $R_m$ liegt, da nur in diesem Fall die R-Behälter belüftet werden. Ist dies nicht der Fall, wird nur die HL aufgefüllt. Die HL-Blocklänge bzw. die Anzahl von HL-Blöcken AHL ist dabei so gewählt, daß für eine bestimmte Druckerhöhung (z.B. 10 mbar) ein bestimmtes Volumen (z.B. 1 Liter) entspannter Luft pro HL-Block benötigt wird. Entsprechend dem Volumenverhältnis von KL-Block und R-Block von 1:8 wird für eine Druckerhöhung der R-Behälter in einem Block um denselben Betrag (10 mbar) das achtfache Volumen (also 8 Liter) entspannter Luft benötigt.

Der Wert VSZUG wird wie folgt ermittelt:

Wird bei einem Lösevorgang der A-Kammersollwert (UREF oder UREFge) nicht über den minimalen R-Druck $R_{min}$ erhöht, wird nur das erforderliche Luftvolumen für die Druckerhöhung in der HL-Leitung berechnet:

$$VSZUG = (UREF - HL_m) * 3 * AHL.$$

Ist der A-Kammersolldruck so hoch, daß außer der HL auch die R-Behälter wieder gefüllt werden, muß der Anteil an entspannter Luft, der in die R-Behälter strömt, berücksichtigt werden. Es gilt dann:

VSZUG = [MIN (UREF, UREFge) - $HL_m$] $*$ 3 $*$ AHL + [MIN (UREF, UREFge) - ($R_m$ + $dR_2$)] $*$ 24 $*$ AR.

(AR ist dabei die Anzahl der R-Blöcke; $dR_2$ ist die Druckdifferenz, um die der HL-Druck größer als der Druck in den Vorratsluftbehältern sein muß, um die R-Behälter zu belüften; dieser Wert liegt bei etwa 30 mbar).

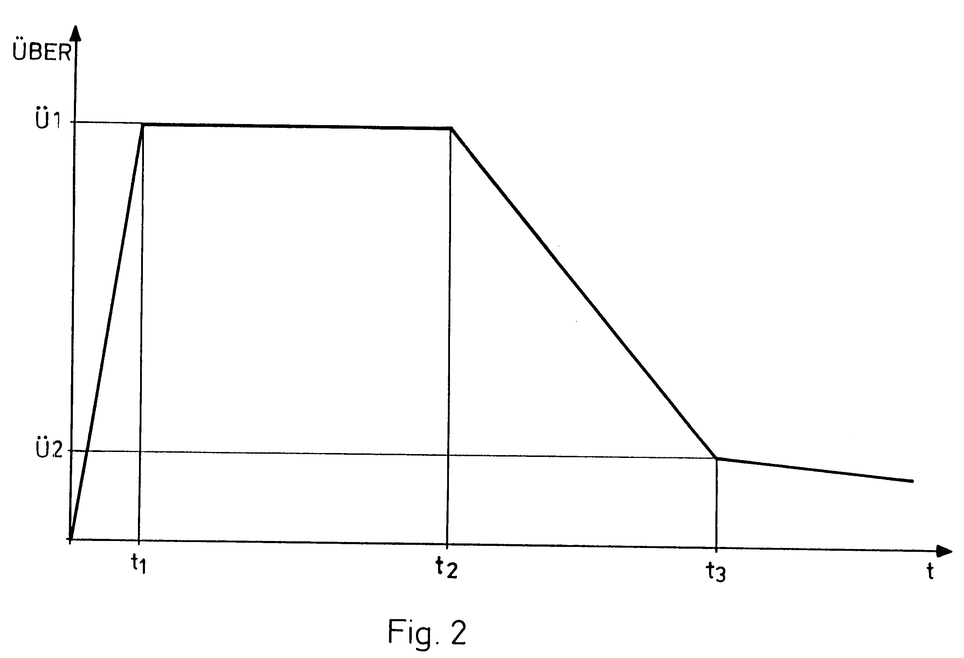

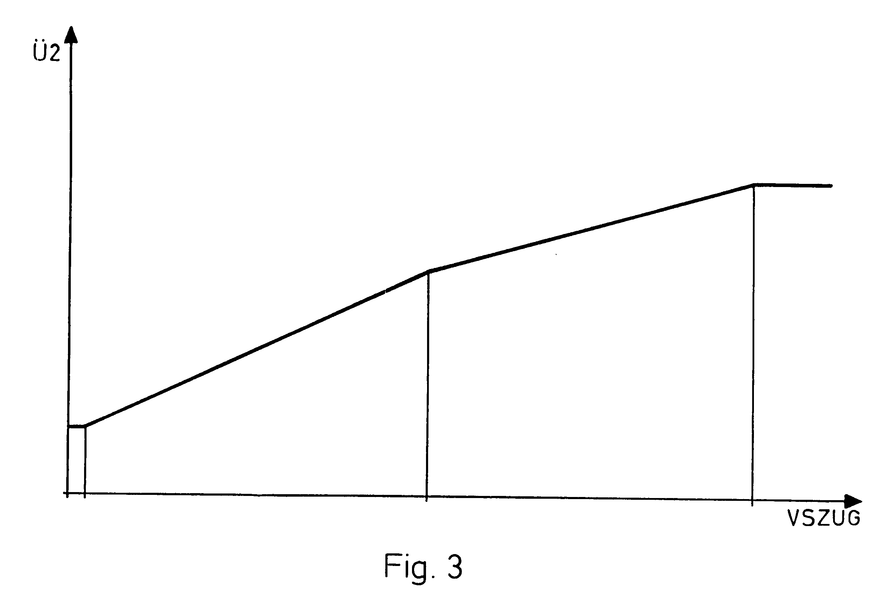

Aus dem Wert VSZUG wird die beim Lösen mögliche Drucküberhöhung "ÜBER" ermittelt, die dem A-Kammersolldruck überlagert wird. Der Verlauf von "ÜBER" ist in Fig. 2 dargestellt. Es sind zwei Sollwerte Ü1 und Ü2 vorgesehen, die über einen konstanten Faktor (z.B. Faktor 5) miteinander verknüpft sind. Die Höhe von Ü1 oder Ü2 wird aus VSZUG ermittelt. Der Zusammenhang zwischen Ü2 und VSZUG ist in Fig. 3 dargestellt. Liegt VSZUG unterhalb eines Grenzwertes, so wird Ü2 konstant gehalten. Ab diesem unteren Grenzwert steigt Ü2 linear mit einer ersten Steigung an bis zu einem zweiten Grenzwert. Ab einem zweiten Grenzwert steigt Ü2 wiederum linear aber etwas flacher als im ersten Bereich an. Oberhalb eines oberen Grenzwertes wird Ü2 wieder konstant gehalten, um ein Überladen der vorderen Wagen des Zuges zu verhindern.

Die tatsächlich dem A-Kammersolldruck beaufschlagte Überhöhung "ÜBER" wird nur bei Vollösen über ein Zeitglied mit vorgegebenem linearen Aufbaugradient (z.B. 1,6 bar/s) bis zum Wert Ü1 aufgebaut und dann für eine vorgegebene Zeitdauer $t_ü$ konstant gehalten. Ist diese Zeit abgelaufen, wird ÜBER von Ü1 über ein zweites Zeitglied nach Ü2 abgebaut. Der Abbaugradient dieses zweiten Zeitgliedes ist so gewählt, daß eventuell vorhandene Schnellbremsbeschleuniger nicht ansprechen. Der Abbaugradient liegt beispielsweise bei 0,333 bar/s. Von Ü2 wird die Überhöhung "ÜBER" über ein drittes Zeitglied auf Null zurückgeführt, so daß dann nur noch der Regelbetriebsdruck als A-Kammersollwert anliegt. Der Abbaugradient des dritten Zeitglie- des ist so flach eingestellt, daß die Bremsventile an den einzelnen Wagen nicht ansprechen. Der Abbaugradient liegt beispielsweise bei 1 bar pro 480 sec.

Die Zeitdauer $t_ü$, während der die Überhöhung Ü1 anliegt, wird in zwei Stufen ermittelt:

Die Stellung des Bremshebels liefert über eine gespeicherte Tabelle eine Überhöhungsreferenzzeit, der über ein Zeitglied die eigentliche Überhöhungsollzeit mit einem vorgegebenen Gradienten nachgeführt wird. Um zu grope Überladungen am ersten Wagen zu vermeiden, soll die Überhöhung Ü1 nicht die gesamte Zeitdauer $t_ü$ anstehen. Die benötigte Zeit für den Abbau von Ü1 nach Ü2 wird deshalb zum Teil berücksichtigt. Dazu wird die Zeit für den Aufbau nach Ü1 gemessen, diese Zeit mit einem konstanten Faktor (z.B. Faktor 2) multipliziert und das Produkt von $t_ü$ subtrahiert. Desweiteren ist eine Kontrolle vorhanden, die eine Überladung von sehr kurzen Zügen (z.B. nur Lok) vermeidet. Bei solchen Zügen ist bereits kurze Zeit nach Erreichen von Ü1 die HL und der/die R-Behälter aufgefüllt und der gemessene Differenzdruck dp geht gegen Null. Zur Vermeidung einer Überladung wird deshalb der Differenzdruck gegen einen unteren Schwellwert $dp_{min1}$ (von z.B. 50mbar) verglichen. Unterschreitet der Differenzdruck dp diesen Schwellwert für eine bestimmte Dauer (z.B. 1 sec), wird sofort mit dem Abbau von Ü1 nach Ü2 begonnen.

## Lernprozeß

Nach einem Aspekt der Erfindung werden die im Zugmodell verwendeten Werte für die Länge des Zuges (AHL und AR) in einem Lernprozeß ermittelt und adaptiv den tatsächlichen Verhältnissen angepaßt. Dieser Lernprozeß wird im Anschluß an einen Lösevorgang durchgeführt, wenn folgende Bedingungen erfüllt waren bzw. sind:

- Seit Lösebeginn muß der gemittelte Differenzdruck an der Strömungsblende einen bestimmten Schwellwert (z.B. $dp_{max}$ = 35 mbar) für eine vorgegebene Zeitdauer (z.B. eine sec) überschritten haben;
- Beim Vollösen müssen seit Lösebeginn mindestens die Zeit für das Erreichen von Ü2 + eine Totzeit (von z.B 2 sec) verstrichen sein;
- Der gemittelte Differenzdruck muß einen vorgegebenen Schwellwert ($dp_{min2}$ von z.B. 20 mbar) für eine gewisse Zeitdauer (z.B. 1 sec) unterschritten haben.

Die ersten beiden Bedingungen müssen zeitlich vor der dritten erfüllt sein. Sobald dann die dritte Bedingung erfüllt ist, wird der Lernprozeß durchgeführt.

Der Lernprozeß beruht auf einem Vergleich zwischen dem tatsächlich in den Zug eingeströmten Luftvolumen und dem durch die Modellgröße erwarteten Luftvolumen. Das tatsächlich eingeströmte Luftvolumen wurde bereits benutzt, um die Modelldrücke von HL und R-Behältern zu erhöhen. Ist die Modellgröße richtig gewählt, so müssen die HL- und R-Drücke den Wert erreicht haben, der durch UREF oder UREFge vorgegeben ist. Weichen das tatsächlich eingeströmte Volumen und das vom Modell errechnete einzuströmende Volumen voneinander ab, so ist der Zug länger oder kürzer als im Modell angenommen. Die Werte AHL und/oder AR müssen dann korrigiert werden.

Ein Maß für die Abweichung des Zugmodelles von der tatsächlichen Zuggröße ist VSZUG zum Zeitpunkt des Lernprozesses. VSZUG gibt zu diesem Zeitpunkt das Luftvolumen an, das noch nachgespeist werden müßte um den Zug vollständig zu lösen, bzw. das in Bezug auf das Zugmodell zuviel nachgespeist wurde. Über das Vorzeichen von VSZUG läßt sich feststellen, ob das Zugmodell vergrößert oder verkleinert werden muß, während der Betrag von VSZUG darüber Auskunft gibt, um welchen Wert die Blockzahlen AHL und /oder AR verändert werden müssen. Ist VSZUG gleich NULL, so stimmen Modell und Wirklichkeit voll überein. Das Modell ist somit richtig; ein adaptiver Lernvorgang für die Modellgrößen AHL und/oder AR ist nicht durchzuführen. Ist VSZUG positiv, dann ist das tatsächliche eingeströmte Luftvolumen Kleiner als erwartet. Das Modell ist zu groß und muß verkleinert werden. Ist VSZUG negativ, dann ist das tatsächlich eingeströmte Luftvolumen größer als erwartet. Das Modell ist zu klein und muß vergrößert werden. Mit $HL_{min}$ alleine oder in Kombination mit $R_{min}$ sowie UREF oder UREFge kann nachträglich der Luftbedarf für das Lösen von längeren oder kürzeren Zügen berechnet werden. Dabei wird ermittelt, für wieviele HL- und/oder R-Blöcke der zum Zeitpunkt des Lernprozesses vorhandene Wert von VSZUG noch reicht bzw. schon zu groß war, um den Solldruck einzustellen.

Wurde bei einem Lösevorgang nur die HL wieder aufgefüllt, darf für diese Neuberechnung nur die Anzahl AHL der HL-Blöcke geändert werden. Wurden dagegen HL und die R-Behälter wieder aufgefüllt, so kann die Anzahl AHL und AR gemeinsam oder in bestimmten Einzelfällen auch nur AR geändert werden. Die Größe der Änderung richtet sich danach, wieviele weitere (oder weniger) HL- und/oder R-Blöcke mit dem bei Initialisierung des Lernvorganges noch verbleibenden Wert von VSZUG hätten gefüllt werden können.

Muß eine grope Änderung der HL- oder R-Blockanzahl durchgeführt werden, wird ein Signal ausgegeben, das der Zugführer quittieren muß. Der Zugführer kann dann bewupt auf Änderungen der Zugkonfiguration reagieren und erkennt auch beispielsweise, ob versehentlich Absperrventile an einzelnen Wagen geschlossen wurden, wodurch die wirksame Länge der HL verkürzt wird.

In einem praktischen Ausführungsbeispiel wird der Lernprozeß iterativ mit unterschiedlichen Blockzahlen durchgeführt. Zur Verringerung des Rechenaufwandes werden AHL und/oder AR dabei in Sprüngen von 0.5 Blöcken verändert. Als erstes erfolgt die Abfrage, ob nur HL- oder HL- und R-Blöcke aufgefüllt wurden. Ergibt diese Abfrage, daß nur HL-Blöcke aufgefüllt wurden, so wird überprüft, ob VSZUG größer oder kleiner Null ist. Ist VSZUG größer Null, so wird ein Wert $VSZUG_{HL1,5}$ errechnet mit einer HL-Blockzahl AHL von 1,5, d. h. ein Wert der dem Luftvolumen zum Füllen von 1,5 HL-Blöcken entspricht. Die Blockzahl der R-Behälter wird dabei nicht verändert. Ist der Wert VSZUG dann größer als $VSZUG_{HL1,5}$, so wird die Anzahl der HL-Blöcke um 2 herabgesetzt. Ist VSZUG dagegen kleiner als $VSZUG_{HL1,5}$, so wird ein weiterer Wert von VSZUG, nämlich der Wert $VSZUG_{HL0,5}$ errechnet, der dem benötigten Luftvolumen für das Füllen von 0,5 HL-Blöcken entspricht. Sodann wird geprüft, ob VSZUG größer oder kleiner als $VSZUG_{HL0,5}$ ist. Ist dies der Fall, so wird die Anzahl der HL-Blöcke um 1 verringert. Ist dies nicht der Fall, so wird die Anzahl der HL-Blöcke konstant gelassen.

Ist VSZUG kleiner Null, so wird zur Rechenvereinfachung für die folgenden Berechnungen das Vorzeichen gewechselt. Sodann werden dieselben Berechnungen und Prüfungen durchgeführt wie oben beschrieben. Ist VSZUG (mit gewechseltem Vorzeichen) dann größer als $VSZUG_{HL1,5}$, so wird die Anzahl der HL-Blöcke um 2 erhöht. Ist diese Bedingung nicht erfüllt, wird wieder der Vergleich mit $VSZUG_{HL0,5}$ durchgeführt. Ist VSZUG größer als $VSZUG_{HL0,5}$, so wird die Anzahl der HL-Blöcke um 1 erhöht. Ist diese Bedingung nicht erfüllt, so wird die Anzahl der HL-Blöcke konstant gelassen.

Ergibt die Prüfung bei Beginn des Lernvorganges, daß der geforderte Solldruck UREF über den bei Beendigung des Bremsens vorhandenen R-Druck $R_m$ angehoben wurde, daß also das nachgespeiste Volumen sowohl in HL als auch in R-Behälter eingeströmt ist, müssen für die Korrektur des Modells die Zahlen AHL und AR angepaßt werden, sofern VSZUG ungleich Null ist. Ist VSZUG in diesem Fall negativ, d.h. kleiner Null, so wird wiederum das Vorzeichen gewechselt und ein Wert $VSZUG_{Zug1,5}$ errechnet, der dem Luftvolumen für das Lösen von je 1,5 HL- und R-Blöcken entspricht. Sodann wird verglichen, ob VSZUG größer $VSZUG_{Zug1,5}$ ist. Ist dies der Fall, so werden AHL und AR um 2 heraufgesetzt. Ist dies nicht der Fall, so wird analog zu obigen Berechnungen ein Wert $VSZUG_{Zug0,5}$ (Luftvolumen für je 0,5 HL- und R-Blöcke) errechnet und verglichen, ob VSZUG größer $VSZUG_{Zug0,5}$ ist. Ist dies der Fall, so werden AHR und AR um 1 erhöht. Ist dies nicht der Fall, so wird ein weiterer Wert $VSZUG_{R0,5}$ errechnet, de das Luftvolumen für das Lösen von 0,5 R-Blöcken darstellt. Sodann wird überprüft, ob VSZUG größer als $VSZUG_{R0,5}$ ist. Ist dies der Fall, so wird AR um 1 erhöht. Ist dies nicht der Fall, werden alle Größen konstant gelassen.

Ist VSZUG größer Null, so werden in analoger Weise die gleichen Berechnungen durchgeführt, wobei dann lediglich bei fälligen Korrekturen die Werte von AHL und/oder AR herabgesetzt werden.

Zu erwähnen ist noch, daß der Lernprozeß nicht nur bei einem Vollösen durchgeführt werden kann sondern auch im Anschluß an ein Teillösen, bei dem also noch eine Bremsstufe eingesteuert ist. Der Teillösevorgang muß natürlich abgeschlossen sein, d. h. es darf praktisch keine Luft mehr in die HL nachgespeist werden, wenn der Lernvorgang durchgeführt wird, was durch die Differenzdruckmessung und den oben genannten Schwellwert $dp_{min2}$ sichergestellt ist.

Für eine Neuinitialisierung der Modelldrücke wird unterschieden, ob ein Vollösen oder ein Teillösen durchgeführt wurde.

Beim Vollösen wird der HL-Druck im Modell mit dem A-Kammersolldruck UREF auf Regelbetriebsdruck abgebaut. Es gilt die Beziehung:

$$HL_m = MAX (UREF - dHL_2, Regelbetriebsdruck).$$

$dHL_2$ ist eine Druckdifferenz, die bei noch nicht vollständig gefülltem Zug vorhanden ist. Sie beträgt beispielsweise 20mbar. Die übrigen Größen werden wie folgt gesetzt:

$$HL_{min} = HL_m$$
$$R_m = Regelbetriebsdruck$$
$$R_{min} = R_m$$
$$C_m = O.$$

Bei einem Teillösen gelten folgende Beziehungen:

$$HL_m = UREF$$
$$HL_{min} = HL_m$$
$$C_m = C_{soll} = min (C_{max}, (dHL * 3 - 0,4 bar)).$$

Ist der neue A-Kammersolldruck größer als $R_{min}$, dann muß auch

$$R_m = UREF - dR_2$$
$$R_{min} = R_m$$

gesetzt werden. Ist dies nicht der Fall, bleiben $R_m$ und $R_{min}$ unverändert.

Beim einschalten der Anlage werden die Blockzahlen AHL und AR auf einen vorgegebenen Wert gesetzt, der einer durchschnittlichen mittleren Zuglänge entspricht. Nach wenigen Brems- und Lösevorgängen oder genauer gesagt Lernvorgängen im Anschluß an Lösevorgänge werden sich diese Zahlen dann der tatsächlichen Zuglänge angepaßt haben.

Nach einem weiteren Aspekt der Erfindung kann auch sehr genau eine Zugtrennung erfaßt werden. Bei einem neu konfigurierten Zug, dessen genaue Länge man noch nicht kennt, wird im Modell ein sehr langer Zug angenommen und der zeitliche Verlauf des tatsächlichen Füllvorganges mit einem für das vollständige Lösen dieses langen Zuges vorgegebenen Zeitverlauf verglichen. Als Kontrollwert wird der gemessene Differenzdruck benutzt. Ein Startwert $DP_{kon}$ für die Überwachung auf Zugtrennung wird im gebremsten Zustand kontinuierlich neu berechnet. Er ist eine Funktion von $HL_{min}$, $R_{min}$ und UREFge:

$$DP_{kon} = [(UREFge - HL_{min}) * 3 + (UREFge - R_{min}) * 24] * 9/256 + 33.$$

Diese Berechnung gilt für das Lösen eines sehr langen Zuges mit großem Luftbedarf. Ist der Lernprozeß soweit fortgeschritten, daß eine genauere Aussage über die Zugkonfiguration gemacht werden kann, werden AHL und AR bei der Berechnung des Startwertes berücksichtigt. Es kann damit eine optimalere Überwachung des Zuges durchgeführt werden. Eine Kontrolle auf Zugtrennung findet im gelösten Zustand statt, sobald die Drucküberhöhung "ÜBER" auf Ü2 abgebaut wurde. Ist diese Bedingung erfüllt, wird der berechnete Startwert $DP_{kon}$ über zwei Zeitglieder bis auf einen Minimalwert $dp_{min3}$ (z.B. 100mbar) abgebaut. Der Abbaugragient liegt beispielsweise bei 150 s/bar, solange $DP_{kon}$ größer 300 mbar ist. Liegt $DP_{kon}$ zwischen 300 mbar und $DP_{min3}$, so ist der Gradient 600 s/bar. Der gemessene Differenzdruck dp wird mit diesem Kontrolldruck $DP_{kon}$ verglichen. Wird der Kontrolldruck für eine bestimmte Zeitdauer überschritten, wird ein Signal "Zugtrennung erkannt" ausgegeben.

Der untere Grenzwert $DP_{min3}$ ist so gewählt, daß die durch Undichtigkeiten hervorgerufene Nachspeisung nicht als Zugtrennung erkannt wird. Eine Zugtrennung, die bei Regelbetriebsdruck stattfindet, wird dagegen sofort erkannt.

Eine weitere Modifikation der Erfindung sieht in einer Subroutine vor, zu prüfen, ob nach mehreren Brems- und Losevorgängen, nach denen das Zugmodell sich an die tatsächliche Zuglänge angepaßt hat, sprunghafte, größere Änderungen auftreten. In diesem Fall wird ein Alarm gegeben, um zu verhindern, daß sich das Zugmodell an eine Zugverkürzung automatisch anpaßt. Eine solche Zugverkürzung könnte auch durch unabsichtliches Absperren der HL hinter der Lok auftreten.

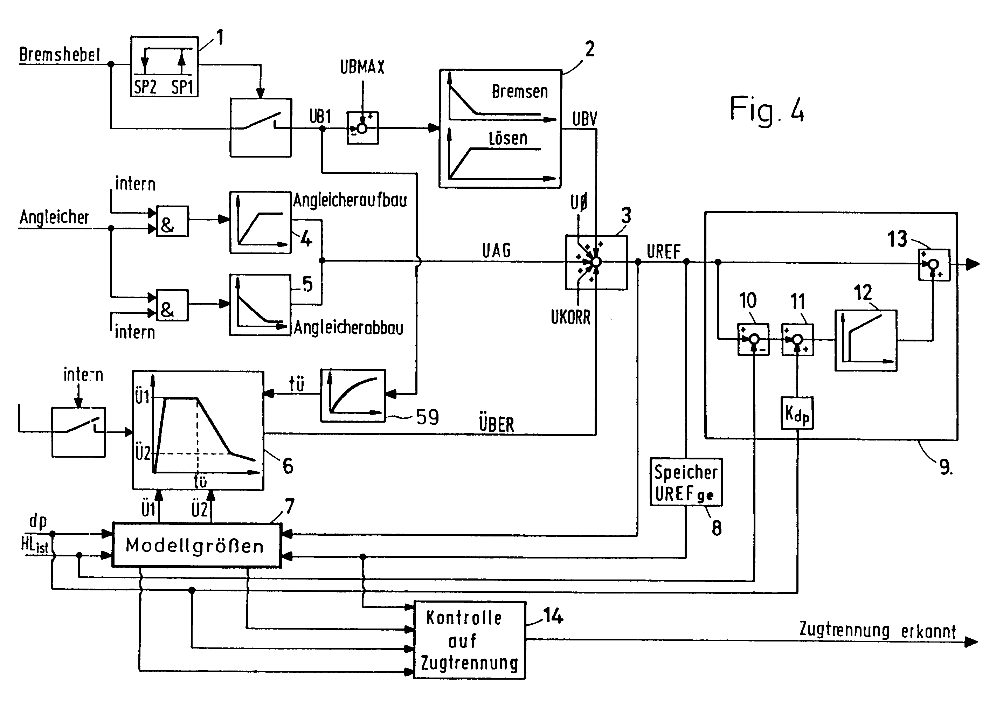

Fig. 4 zeigt die Bildung des A-Kammersollwertes. Die Betätigung eines Bedienorganes, z.B. eines Führerbremshebels wird abgetastet und entsprechend der EP-A-0.152.958 mittels einer Nachbildung 1 eines Ansprungverhaltens und mittels Zeitgliedern 2, die den Gradienten bzw. die Steilheit einer Signaländerung bestimmen, zu einem ersten Wert UBV umgewandelt, der einem Summierer 3 zugeführt wird. Der durchgeschaltete Bremshebelwert UB1 wird über eine (gespeicherte) Tabelle und ein Zeitglied (59??) in die Überhöhungssollzeit $t_ü$ überführt.

Zur Nachbildung einer Angleicherfunktion sind - wie ebenfalls aus der EP-A-0.152.958 bekannt - mehrere Baugruppen 4, 5 vorgesehen, die einen Angleicherwert UAG dem Summierer 3 zuführen. Bestimmte, hier nicht näher interessierende Korrekturgrößen $U_{korr}$ und $U_0$ werden ebenfalls dem Summierer 3 zugeführt. Schließlich wird dem Summierer 3 ein Überhöhungswert "ÜBER" zugeführt, der in einem Funktionsblock 6 aus dem elektronischen Zugmodell 7 gebildet wird. Weitere Ausgangsgrößen des elektronischen Zugmodells werden für die Kontrolle auf Zugtrennung (14) benutzt. Das Ausgangssignal UREF des Summierers 3 ist ein Maß für die Anforderung des Vorsteuerdruckes und damit den HL-Druck. Der zu Beginn einer Bremsung anstehende Wert von UREF wird in einem Speicher 8 als UREFge gespeichert. Der Wert UREF wird in einem Regler 9 zu einem Sollwert $U_{soll}$ verarbeitet, der einem Analogwandler zugeführt wird, der durch Ansteuerung von Ventilen den A-Druck (Vorsteuerdruck) einstellt, der dem Relaisventil. der Bremsanlage zugeführt wird. Der Regler enthält einen Vergleicher 10, der ein Signal, das dem gemessenen HL-Druck entspricht, von UREF subtrahiert. Das Ausgangssignal des Subtrahierers 10 wird einem Summierer 11 zugeführt, in welchem ein Differenzdruckwert, multipliziert mit einem Faktor K1 summiert wird. Die Druckdifferenz dp wird von zwei Druckaufnehmern beidseitig einer Strömungsblende im Nachspeisezweig für die HL gemessen. Der Wert dp ist damit ein Maß für die Strömungsgeschwindigkeit der nachgespeisten Luft. Der Ausgang des Summierers wird dem eigentlichen Regler 12 zugeführt, der hier eine PI-Charakteristik (proportional-integral) hat. Der Ausgang des Reglers 12 wird einem Summierer 13 zugeführt und dem Wert UREF addiert, wobei die Summe dann der Sollwert $U_{soll}$ für den Analog-Wandler ist.

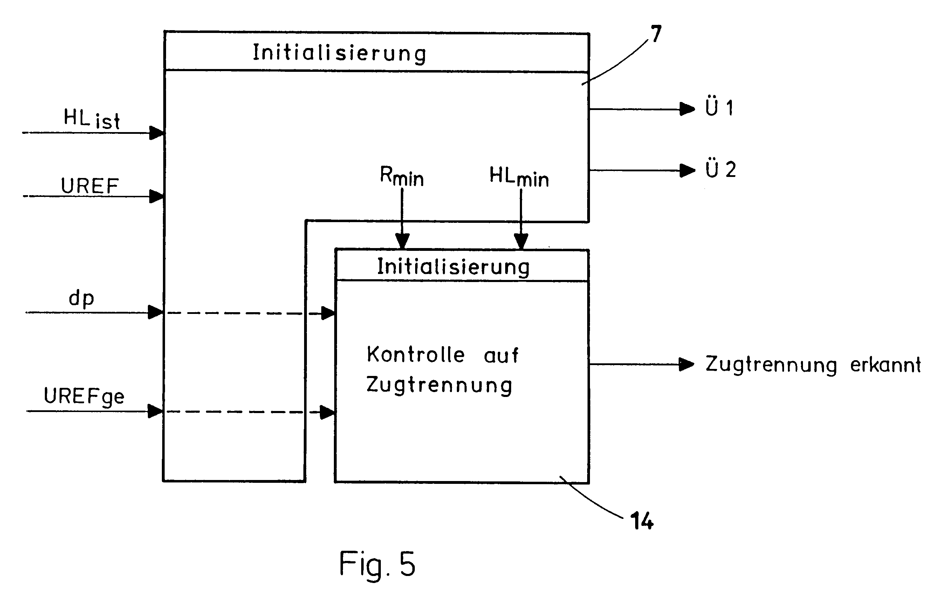

Fig. 5 verdeutlicht die Eingangs- und Ausgangsgrößen für das Zugmodell 7 und die Kontrolle auf Zugtrennung 14. Eingangsgrößen sind Meßwerte des HL-Druckes und des erwähnten Differenzdruckes dp. Weitere Eingangsgrößen sind die Werte UREF und UREFge.

Im Zugmodell 7 werden aus diesen vier Eingangsgrößen sowie intern gespeicherten Werten Sollgrößen Ü1 und Ü2 für die Drucküberhöhung beim Lösevorgang gebildet. Aus den Größen Ü1 und Ü2 wird dann im Block 6 der Fig. 4 der tatsächliche Überhöhungswert "ÜBER" gebildet. Weitere Ausgangswerte des Zugmodelles 7 sind $HL_{min}$ und $R_{min}$, die zusammen mit dem Meßwert dp und dem Wert UREFge einer Kontrolleinrichtung 14 für die Überwachung auf Zugtrennung zugeführt werden. Die Werte $HL_{min}$ und $R_{min}$ sind vom Zugmodell ermittelte Werte des HL- und des R-Druckes, von denen aus der Lösevorgang gestartet wurde.

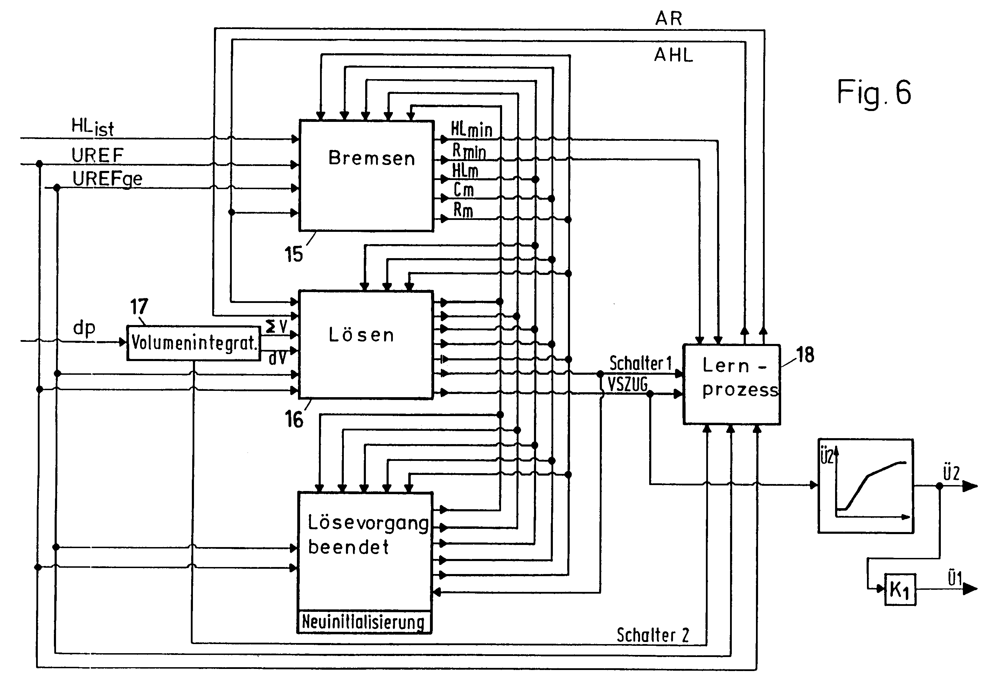

Fig. 6 zeigt ein detaillierteres Blockschaltbild des Zugmodelles 7 der Fig. 5. Wie im Zusammenhang mit Fig. 1 ausführlicher erläutert, bildet das Zugmodell im wesentlichen drei Drücke nach und zwar den HL-Druck $HL_m$, den R-Behälterdruck $R_m$ und den Bremszylinderdruck $C_m$. Da diese Nachbildungen beim Bremsen und beim Lösen unterschiedlich gebildet werden, sind im Blockschaltbild unterschiedliche Blöcke 15 und 16 dargestellt. Der Block 15 bildet aus den externen Eingangsgrößen $HL_{ist}$, UREFge und UREF sowie der internen Größe AHL die Modellgrößen $HL_m$, $R_m$, $C_m$ und die Größen $HL_{min}$ und $R_{min}$.

Für die Nachbildung der entsprechenden Druckwerte beim Lösen wird aus dem Meßwert dp mittels einer Volumenintegration 17 die Summe $\Sigma V$ des seit dem Lösebeginn nachgespeisten Volumens und ein Wert dV des momentan pro Zeiteinheit nachgespeisten Volumens ermittelt und dem Block 16 zugeführt. Zusätzlich werden die internen Größen AR und AHL berücksichtigt. Aus diesen Werten werden dann einerseits der für den adaptiven Lernprozeß benötigte Wert VSZUG, der den für den aktuellen Lösevorgang noch benötigten Luftbedarf darstellt und die Überhöhungswerte Ü1 und Ü2 gebildet.

In einem Block 18 für den Lernprozeß wird aus VSZUG, UREF und UREFge sowie $HL_{min}$ oder $HL_{min}$ und $R_{min}$ die Anzahl der HL- und der R-Blöcke AHL bzw. AR ermittelt, wenn ein Signal (aus der Volumenintegration 17) gegeben wird.

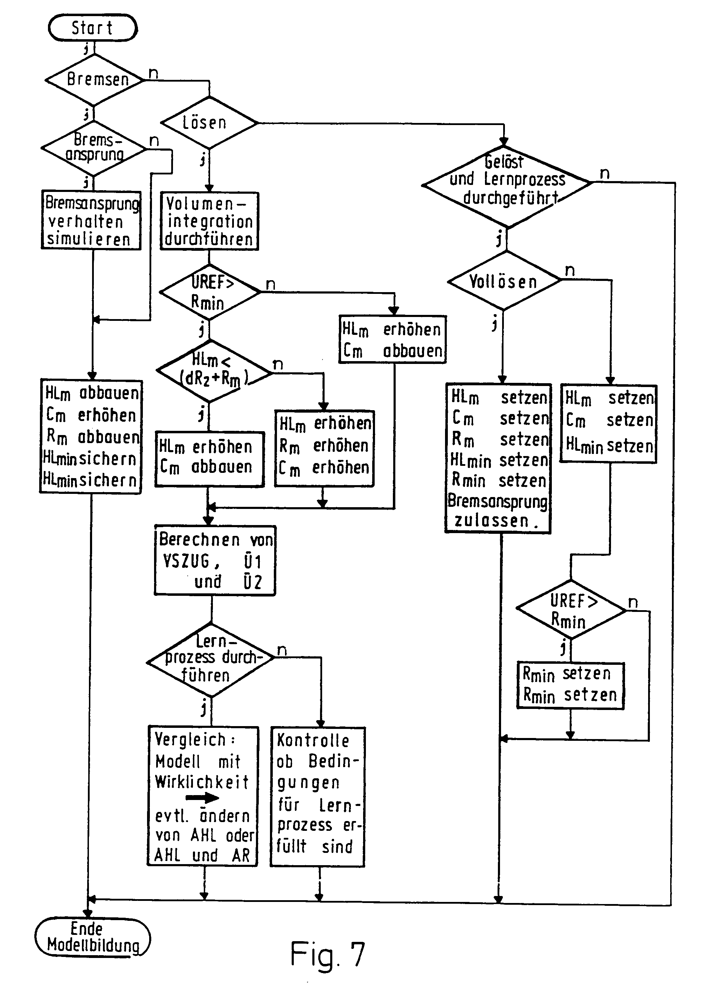

Im Flußdiagramm der Fig. 7 sind die einzelnen Prüfungen und Arbeitsschritte dargestellt. Weitere Erläuterungen hierzu sind nicht erforderlich.

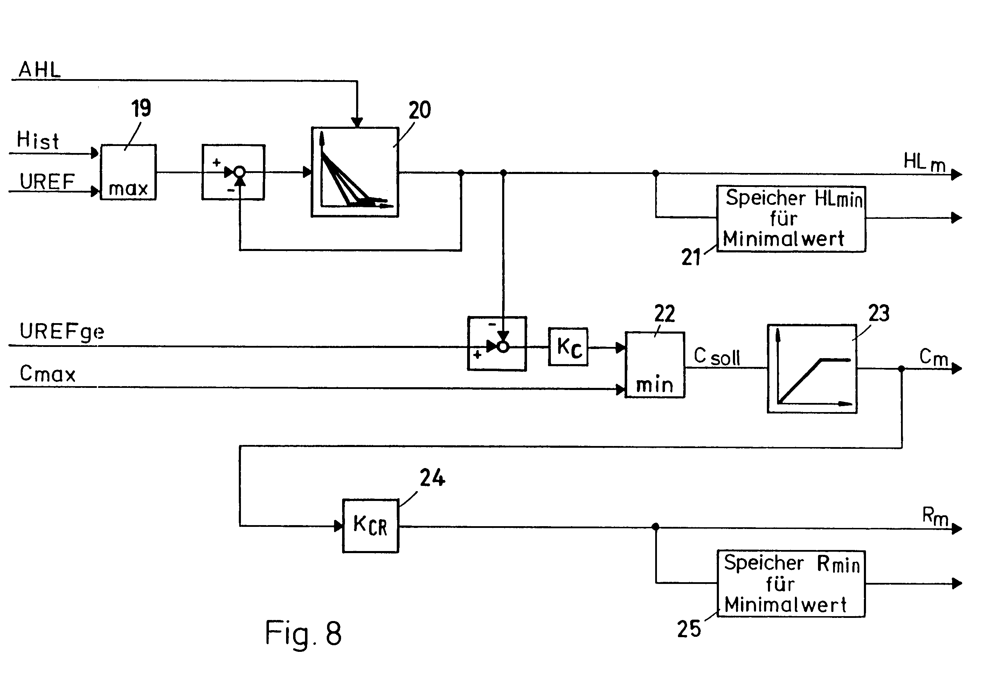

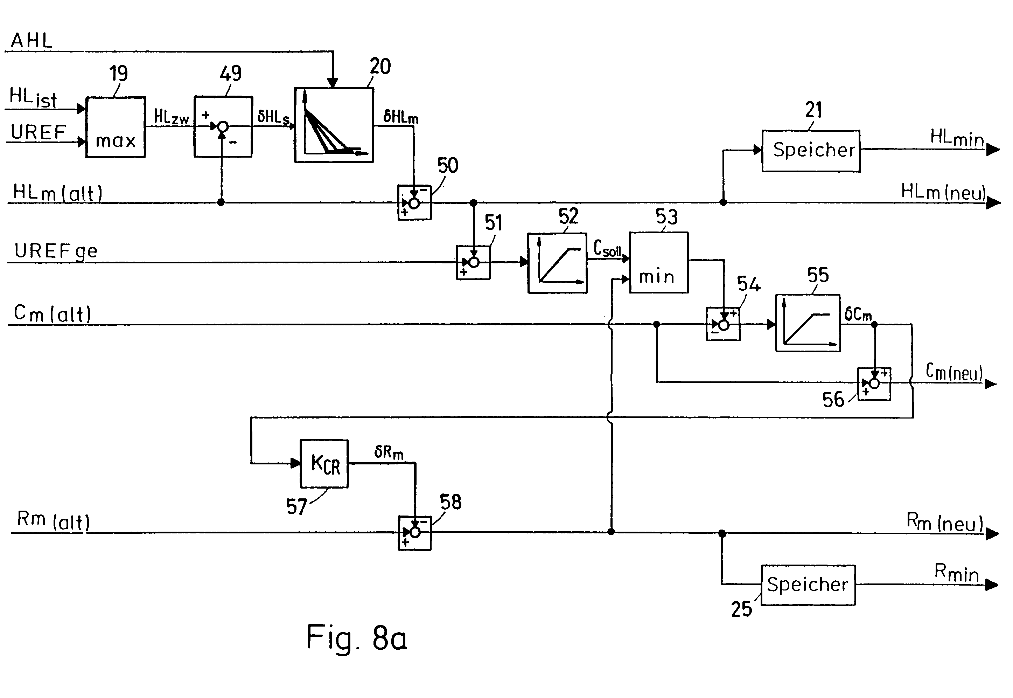

Fig. 8 zeigt detaillierter die Nachbildung der Modellgrößen beim Bremsen. Der Meßwert $HL_{ist}$ und die Sollgröße UREF werden einer Maximalwertauswahl 19 zugeführt zur Bildung eines Zwischenwertes. Diesem Zwischenwert wird $HL_m$ in einem Block 20 zeitlinear nachgeführt, wobei der Gradient von der gespeicherten Anzahl von HL-Blöcken AHL abhängt. Der Ausgang des Blockes 20 ist die Modellgröße $HL_m$. In einem zusätzlichen Speicher 21 wird der Minimalwert von $HL_m$ gespeichert.

Zur Nachbildung des C-Druckes wird die Differenz zwischen UREFge und $HL_m$ gebildet und mit einem Faktor $K_c$ multipliziert. In einer Minimumauswahl 22 wird dieser multiplizierte Differenzwert mit dem maximalen C-Druck $C_{max}$ verglichen, wobei der Minimalwert dann den Solldruck $C_{soll}$ des Zugmodelles darstellt. Über ein Zeitglied 23 mit vorgegebenem Gradienten wird $C_m$ aus $C_{soll}$ gebildet, wobei $C_m$ nicht größer als $R_m$ werden darf, da dann der Druckausgleich erreicht ist. Aus $C_m$ wird über eine Multiplikation mit einem konstanten Faktor (z.B. Faktor 5) in einem Multiplizierer 24 der Wert $R_m$ gebildet. In einem weiteren Speicher 25 wird der jeweils aktuelle Minimalwert von $R_m$ gespeichert. Die in Fig. 8 dargestellten Blöcke entsprechen zusammengefaßt dem Block 15 der Fig. 6.

Fig. 8a zeigt detaillierter die Nachbildung der Modellgrößen beim Bremsen. Der Meßwert $HL_{ist}$ und die Sollgröße UREF werden - wie bei Fig. 8 - der Maximalwertauswahl 19 zur Bildung des Zwischenwertes $HL_{zw}$ zugeführt. In einem Subtrahierer 49 wird der vom vorhergehenden Zeittakt anliegende Wert $HL_{m(alt)}$ von dem Zwischenwert subtrahiert, zur Bildung eines Wertes $\delta HL_s$. In dem Block 20 wird dieser Wert $\delta HL_s$ zeitlinear vergrößert, wobei die Anzahl der HL-Blöcke AHL als Parameter dient. Am Ausgang des Blockes erscheint dann ein Wert $\delta HL_m$, der ein Maß dafür ist, um welchen Betrag das zum vorhergehenden Zeittakt vorliegende $HL_m$ verringert werden muß, um einen neuen Wert $HL_{m(neu)}$ zu erhalten. Der Wert $\delta HL_m$ wird daher von $HL_{m(alt)}$ in einem Subtrahierer 50 subtrahiert. Der Ausgang des Subtrahierers 50 stellt dann den Wert $HL_{m(neu)}$ zur Ver-

fügung.

In einem weiteren Subtrahierer 51 wird der Ausgang des Subtrahierers 50 von dem gespeicherten Wert der Bremsanforderung UREFge subtrahiert, wobei diese Differenz UREFge minus $HL_{m(neu)}$ in einem Block 52 zeitlinear mit vorgegebener Steigung erhöht wird, jedoch mit einer Begrenzung auf den Höchstwert $C_{max}$. Der Ausgang des Blockes 52 stellt das Signal $C_{soll}$ dar, das einem Minimalwertauswahlschaltkreis 53 zugeführt wird. Der Schaltkreis 53 wählt das Minimum von $C_{soll}$ und $R_{m(neu)}$ aus und gibt dieses an einen Subtrahierer 54 weiter, wo der Wert $C_{m(alt)}$ subtrahiert wird. Diese Differenz wird in einem weiteren Schaltkreis 55 zeitlinear erhöht zur Bildung eines Wertes $\delta C_m$ Dieser Wert $\delta C_m$ gibt an, um welchen Betrag der C-Modelldruck $C_m$ pro Zeittakt erhöht werden muß. Dementsprechend werden der Wert $\delta C_m$ und $C_{m(alt)}$ einem Subtrahierer 56 zugeführt, dessen Ausgangssignal der neue Wert von $C_m$ ist. Da die Modelldrücke $C_m$ und $R_m$ über einen konstanten Faktor miteinander gekoppelt sind, ist auch der Wert $\delta C_m$ um diesen Faktor proportional der pro Zeittakt zu erfolgenden Absenkung des Modelldruckes $R_m$. Daher ist der Ausgang des Schaltkreises 55 mit einem Multiplizierer 57 verbunden, der den Wert $\delta C_m$ mit diesem konstanten Faktor multipliziert, woraus man dann ein $\delta R_m$ erhält, d.h. einen Wert, der angibt, um welchen Betrag der Modelldruck $R_m$ pro Zeittakt reduziert werden muß. Das Ausgangssignal des Multiplizierers 57 wird daher in einem Subtrahierer 58 von dem vorhergehenden Wert des R-Modelldruckes $R_{m(alt)}$ subtrahiert zur Bildung des neuen Wertes $R_{m(neu)}$.

Durch den Minimumauswahlschaltkreis 53 wird im Ergebnis sichergestellt, daß der Modelldruck $C_m$ nicht größer als der Vorratsbehälterdruck $R_m$ werden kann. Die übrigen, hier nicht näher erwähnten Schaltkreise der Fig. 8a entsprechen denen der Fig. 8.

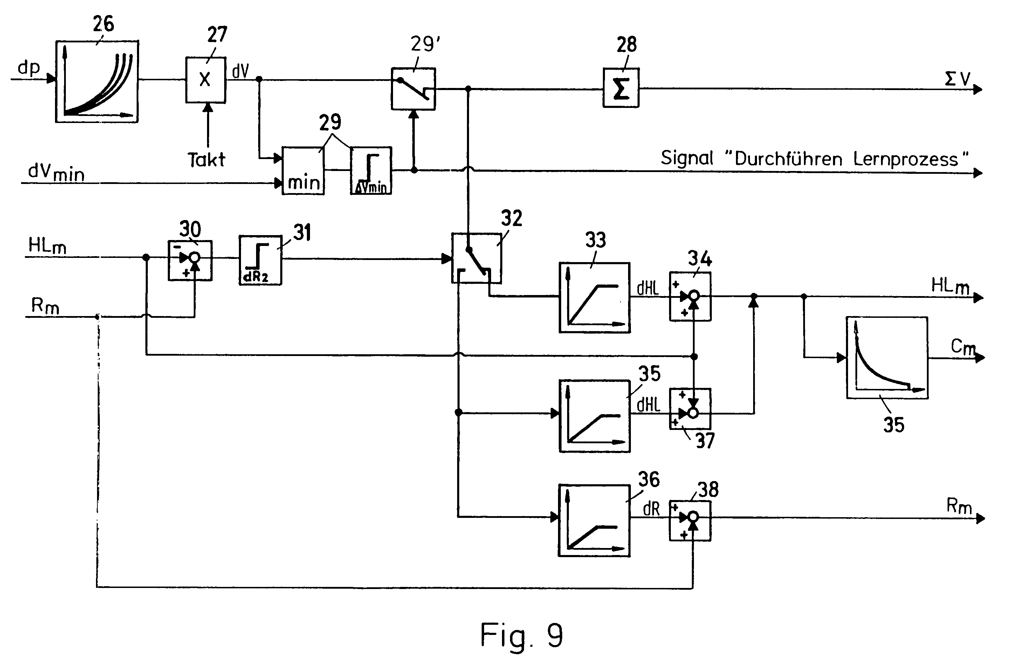

In Fig. 9 ist der Block 16 der Fig. 6 detaillierter aufgelöst. Aus dem Meßwert dp wird durch Abfrage eines Speichers 26, der Eichkurven für die Druckaufnehmer und ggf. verschiedene Nachspeisedrücke (HB-Drücke) enthält, ein Wert der Strömungsgeschwindigkeit der beim Lösen nachgespeisten Luft ermittelt. Aus diesem Wert wird unter Steuerung des Zeittaktes im Block 27 ein Wert des pro Zeittakt nachgespeisten Volumens dV gebildet. In einem digitalen Integrierer 28 werden die Werte von dV aufaddiert, woraus man den Wert $\Sigma V$ enthält, der das seit Lösebeginn tatsächlich nachgespeiste Luftvolumen darstellt.

Der Wert dV wird in einem Vergleicher 29 mit einem Schwellwert $dV_{min}$ verglichen. Unterschreitet dV diesen Schwellwert für eine bestimmte Zeitdauer, so wird der Lösevorgang als beendet betrachtet, da das dann nachgespeiste Volumen so klein ist, daß es zu keiner effektiven Druckerhöhung des HL-Druckes führt. Das Ausgangssignal des Komparators 29 öffnet dann einen Schalter 29', womit der Summierer 28 unwirksam geschaltet wird. Weiterhin wird dieses Ausgangssignal zu dem Block "Lernprozeß" weitergegeben, der dann nach beendetem Lösevorgang gestartet wird.

Zur Unterscheidung, ob das momentan nachgespeiste Volumen nur zum Auffüllen der HL oder zum gemeinsamen Auffüllen von HL- und R-Behältern dient, wird geprüft, ob UREF größer $R_m$ ist und ob $Hl_m$ noch unter dem bei Ende des Bremsvorganges vorhandenen Wert $R_m$ liegt. Letzteres kann beispielsweise dadurch erfolgen, daß die Differenz $R_m$-$HL_m$ von einem Subtrahierer 30 gebildet und in einem Schwellwertschalter 31 mit dem Bezugswert $dR_2$ (z.B. 30 mbar) verglichen wird. Liegt $HL_m$ noch unter $R_m$, so wird hierdurch ein Umschalter 32 so gesteuert, daß dV nur zum Erhöhen des Modelldruckes $HL_m$ verwendet wird. Die Inkremente dV werden dann in einem Block 33 mit einem Faktor multipliziert und aufsummiert. Dieser Faktor entspricht dem Gradient für den Anstieg von $HL_m$ und hängt von der Anzahl der HL-Blöcke AHL ab. Am Ausgang des Blockes 33 erscheint dann ein Signal, das den erzielten Druckanstieg dHL repräsentiert. In einem Addierer 34 wird dieser Wert zu dem vorhandenen Modelldruck $HL_m$ addiert, woraus man dann den beim Lösen ansteigenden Modelldruck $HL_m$ erhält. Aus diesem Wert wird in einem Block 35 der C-Druckabbau nach einer Zeitfunktion bestimmt. Diese Zeitfunktion ist theoretisch eine e-Funktion, die hier durch vier Geradenabschnitte angenähert wird.

Ergibt die Prüfung im Subtrahierer 30 und Komparator 31, daß der Druck $HL_m$ den Druck $R_m$ erreicht hat ( und $U_{REF} > R_m$ ist) , so bedeutet dies, daß das nachgespeiste Volumen dV nun zum Auffüllen von HL und den R-Behältern verwendet wird. Der HL-Druckaufbau erfolgt dann mit einem flacheren Gradienten, da der größere Anteil der nachgespeisten Luft zum R-Druckaufbau verwendet wird. Der Schalter 32 schaltet dann um, so daß die Inkremente dV zwei Blöcke 35 und 36 für den langsameren HL-Druckaufbau und den R-Druckaufbau zugeleitet werden. Die Gradienten für diesen Aufbau werden im Block 35 durch die Anzahl der HL-Blöcke AHL und im Block 36 durch die Anzahl der R-Blöcke AR bestimmt. Die so mit diesen Gradienten bestimmten Inkremente für den HL- und den R-Druckanstieg dHL und dR werden analog dem Summierer 34 in Summierern 37 bzw 38 zu den beim letzten Zeittakt ermittelten Werten von $HL_m$ und $R_m$ hinzuaddiert, woraus man dann die aktuellen Werte $HL_m$ und $R_m$ erhält.

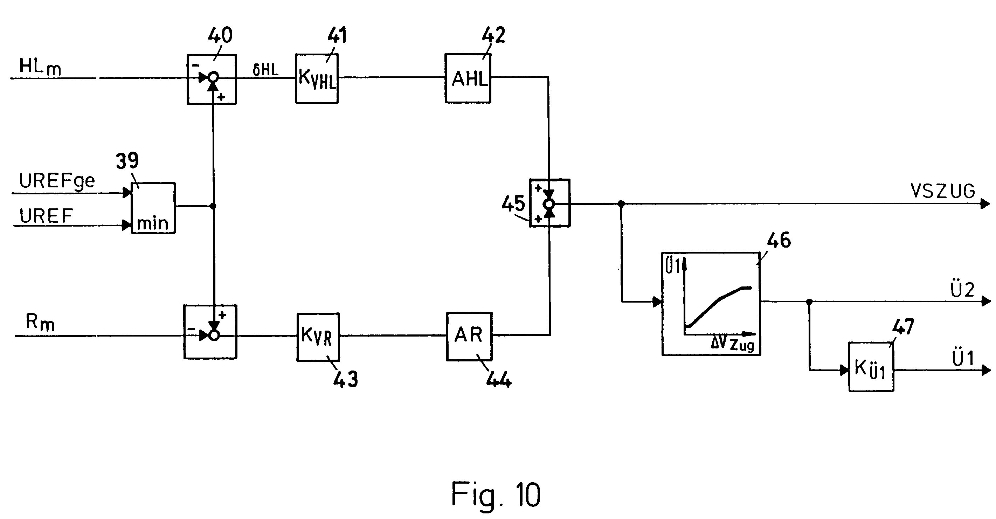

Aus diesen beiden Werten werden dann gemäß Blockschaltbild der Fig. 10 die Werte für VSZUG, Ü1 und Ü2 ermittelt. Als weitere Eingangsgrößen dienen die Werte UREF und UREFge. Das Minimum dieser beiden Werte wird in einer Minimalauswahl 39 ermittelt und einem Subtrahierer 40 zugeführt, wo der Wert $HL_m$ abgezogen wird. Der dabei entstehende Differenzwert $\delta HL$ wird in einem Multiplizierer 41 mit einem konstanten Faktor und in einem weiteren Multiplizierer mit der aktuellen Anzahl von HL-Blöcken multipliziert. In ähnlicher Weise wird die Differenz aus dem Minimum von UREFge und UREF minus $R_m$ gebildet und in Multiplizierern 43 und 44 mit einem konstanten Faktor bzw. der Anzahl von R-Blöcken AR multipliziert. Der Faktor des Multiplizierers 43 kann willkürlich vorgegeben sein. Der Lernvorgang hat jedoch günstigere Startbedingungen wenn dieser Faktor dem Volumenverhältnis zwischen dem Volumen der R-Behälter eines Blockes und dem Volumen der HL-Leitung eines Blockes angenähert ist. Bei üblichen Güterzügen ist dieses Verhältnis etwa 1:8, bei modernen Reisezugwagen, bei denen die HB-Leitung (Nachspeiseleitung) durch den Zug geschleift ist und die R-Behälter unmittelbar aus der HB-Leitung gefüllt werden, ist - von der HL her gesehen- die Anzahl AR dagegen gleich NULL, da das über die HL zu den R-Behältern nachzuspeisende Luftvolumen gleich NULL ist. Die Ausgangswerte der Multiplizierer 42 und 44 werden einem Summierer 45 addiert, woraus sich dann der Wert VSZUG für das noch nachzuspeisende Volumen ergibt. Aus diesem Wert wird dann in einem Block 46 entsprechend einer vorgegebenen Kennlinie ein Wert für Ü2 gebildet. Da die Werte Ü1 und Ü2 hier in einem festen Verhältnis zueinander stehen (z.B. Faktor 5), wird aus Ü2 in einem Multiplizierer 47 der Wert Ü1 gebildet. Aus diesen beiden Werten wird dann im Block 6 der Fig. 4 der tatsächliche Überhöhungswert "ÜBER" gebildet, um den der Vorsteuerdruck zum schnelleren Lösen zusätzlich angehoben werden soll.

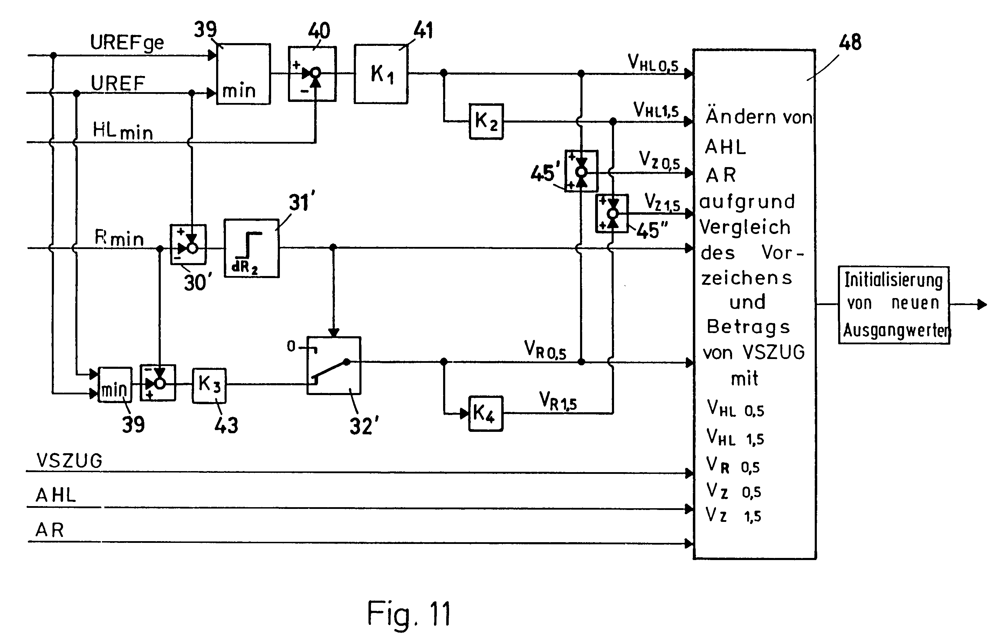

Fig. 11 zeigt ein Blockschaltbild für den Lernprozeß.

Beim Lernprozeß wird analog zur Bildung von VSZUG gemäß Fig. 10 ausgehend von dem vorausgegangenen Lösevorgang nachträglich der Luftbedarf für 0,5 und 1,5 H1-Blöcke, 0,5 und 1,5 R-Blöcke sowie für 0,5 und 1,5 Zugblöcke (bestehend aus HL- und R-Blöcken) berechnet. VSZUG kann dabei positiv oder negativ sein. Im konkreten Falle werden in Abweichung zum Blockschaltbild der Fig. 10 als Eingangsgrößen die Werte $HL_{min}$ und $R_{min}$ verwendet, woraus dann analog den Ausgängen der Multiplizierer 42 und 44 der Fig. 10 Inkremente nachgespeister Luftmengen für HL- und/oder R-Blöcke für +/- eine halbe bzw. eineinhalb Blocklängen bestimmt werden. Man erhält dann folgende Werte:

$V_{HL0,5}$, was dem benötigten Volumen für das Auffüllen eines halben HL-Blockes entspricht;

$V_{HL1,5}$ entsprechend dieser Luftmenge bei eineinhalb HL-Blöcken.

$V_{R0,5}$ entsprechend dem noch nachzuspeisenden Volumen für die R-Behälter bei einem halben ; und

$V_{R1,5}$ entsprechend diesem Volumen bei eineinhalb R-Blöcken. In Summierern 45' bzw. 45", die funktionsmäßig dem Addierer 45 der Fig. 10 entsprechen, werden dann korrigierte Werte für VSZUG gebildet für entsprechend geänderte Blockzahlen.

Entsprechend Fig. 9 wird auch hier wiederum geprüft, ob das nachzuspeisende Volumen für das Auffüllen von HL alleine oder von HL und den R-Behältern dient. Hierzu werden die Größen UREF und $R_{min}$ verglichen (vgl. Subtrahierer 30' und Schwellwertschalter 31'). Ergibt dieser Vergleich, daß nur HL aufgefüllt wird, so steuert der Ausgang des Komparators 31' einen Schalter 32', der funktionsmäßig dem Schalter 32 in Fig. 9 entspricht. Wird bei dem Vergleich festgestellt, daß nur HL aufgefüllt wird, so wird der Schalter in die Nullstellung gebracht, so daß keine nachzuspeisenden Volumina für die R-Behälter berechnet werden.

Aus den ermittelten Größen wird dann in einem Rechenblock 48 der eigentliche Lernprozeß durchgeführt, bei dem die Blockzahlen AHL und/oder AR aufgrund des Vergleiches von Vorzeichen und Betrag von VSZUG mit den durch die veränderten Blockzahlen modifizierten Werten verglichen werden. Nach Abschluß des Lernprozesses in dem Block 48 werden die ggf. geänderten Blockzahlen AHL und AR für den nächsten Zyklus als neue Ausgangswerte ausgegeben.

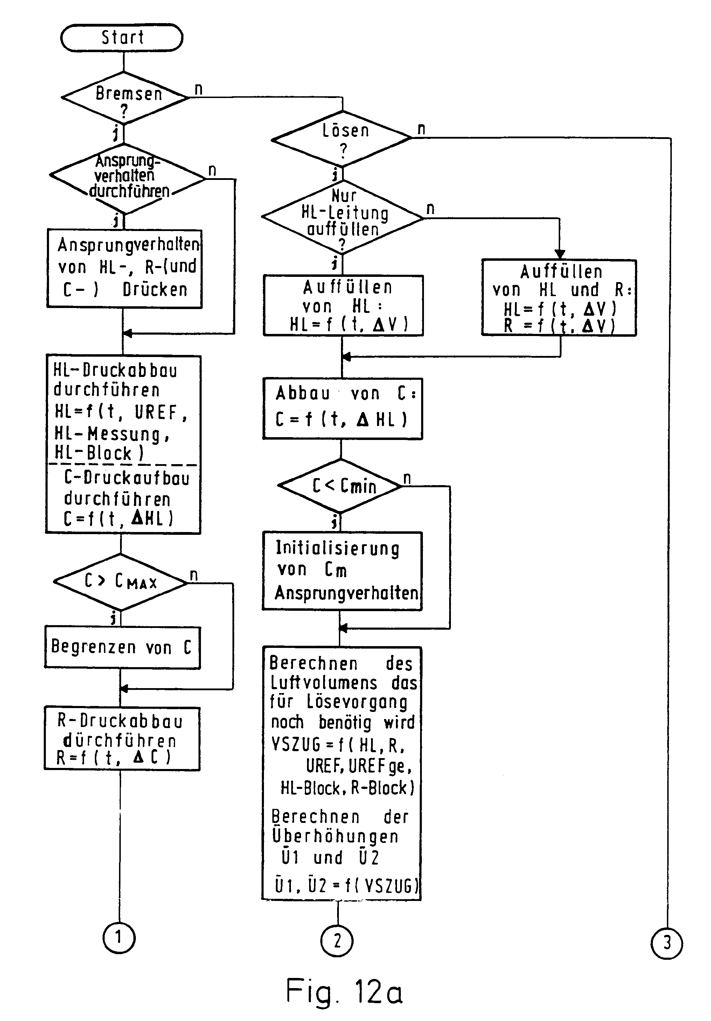

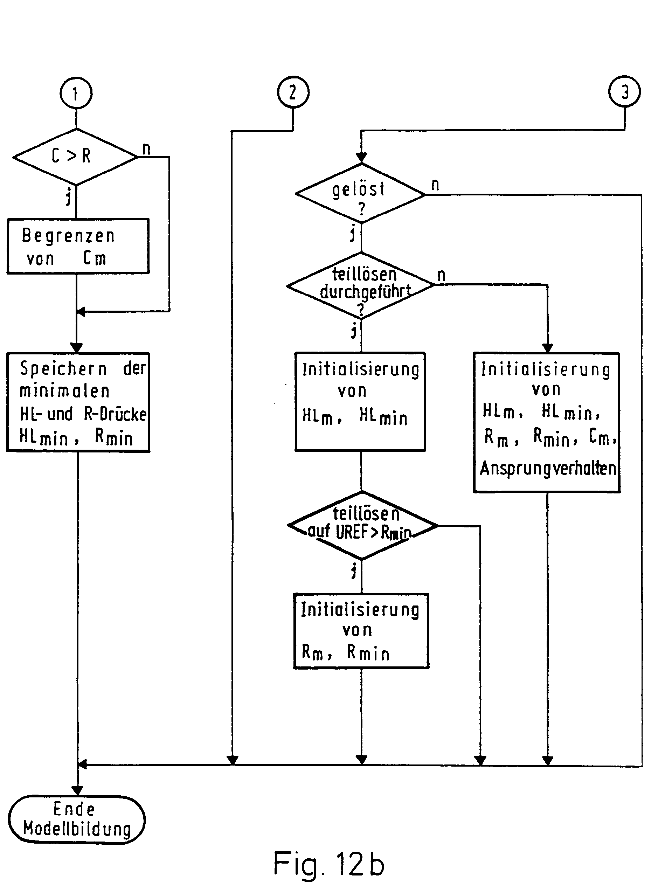

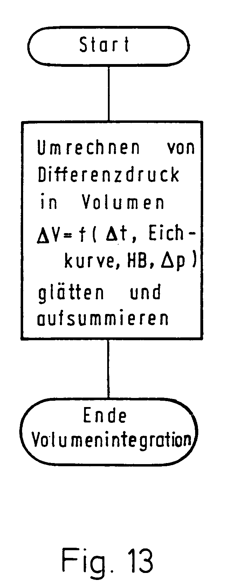

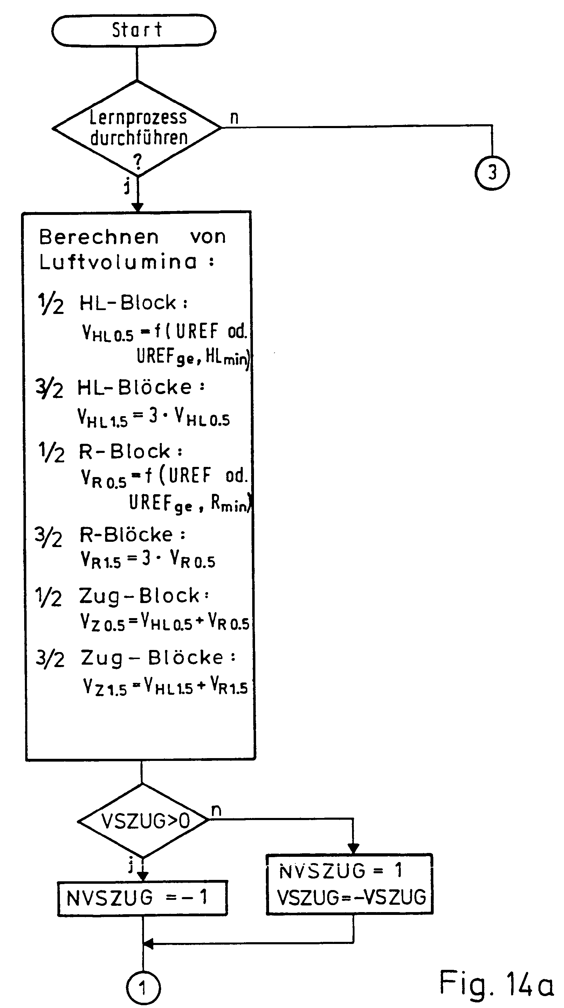

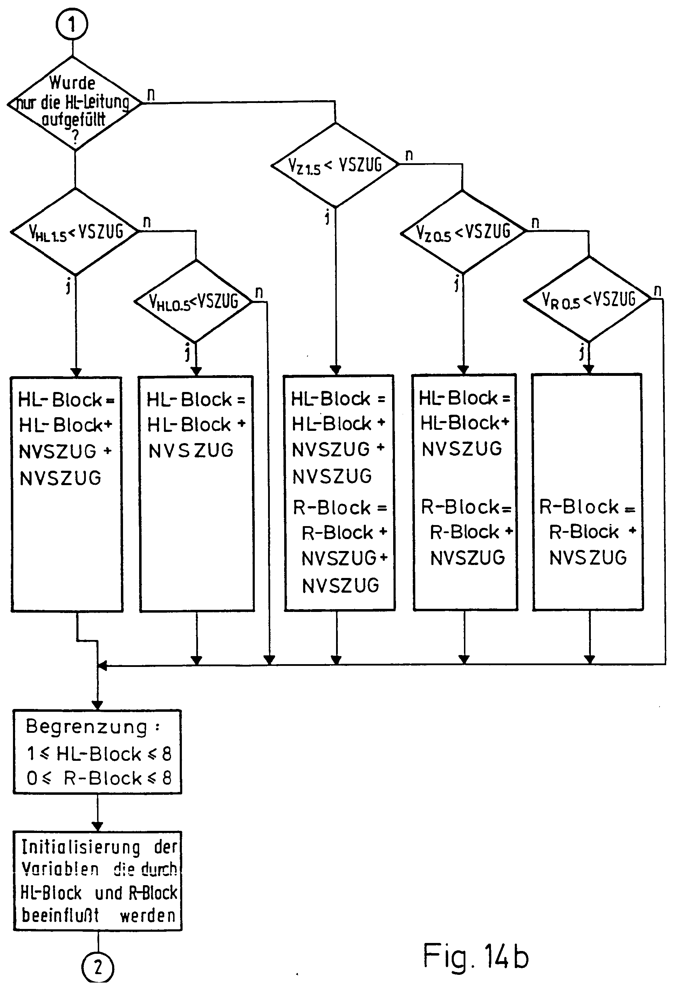

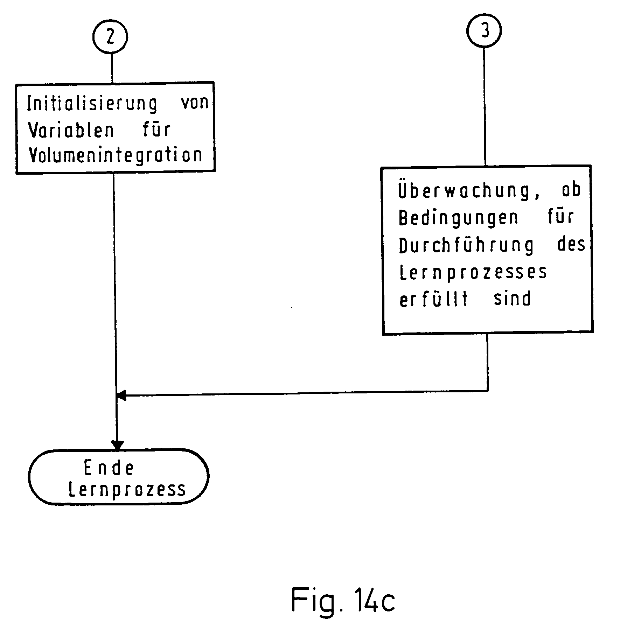

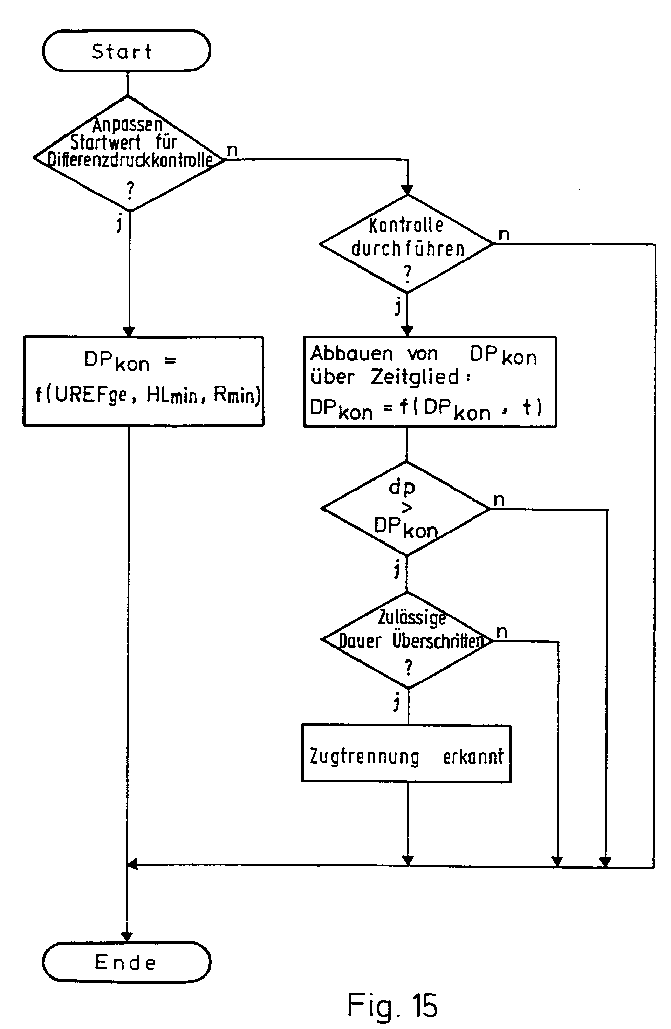

Fig. 12 zeigt noch einmal detaillierter ein Flußdiagramm der Arbeitsweise des Zugmodelles für die Nachbildung der verschiedenen Drücke. Diese Fig. soll wie die anderen Flußdiagramme die oben beschriebenen Ablauffolgen deutlicher darstellen. Fig. 13 zeigt entsprechend die Volumenintegration. Fig. 14 zeigt den Lernprozeß. Fig. 15 zeigt schließlich die Überwachung auf Zugtrennung.

## Patentansprüche

1. Verfahren zur adaptiven Bremssteuerung für indirekt wirkende Druckluftbremsen, die ein elektropneumatisches Führerbremsventil mit einem Bedienorgan zur Einstellung eines Sollwertes (UREF) für den Bremsdruck, eine Hauptluftleitung (HL), ein daran angeschlossenes Relaisventil, mehrere an die Hauptluftleitung (HL) angeschlossene Vorratsluftbehälter sowie einen ersten und einen zweiten Meßfühler aufweist, wobei das Führerbremsventil einen Vorsteuerdruck (A-Druck) für das Relaisventil erzeugt, mit folgenden Schritten:

a) Messen des in die Hauptluftleitung (HL) beim Lösen der Bremse eingespeisten Luftvolumens (ΣV);

b) Messen des Luftdrucks (HList) in der Hauptluftleitung (HL);

c) Modifizieren des Vorsteuerdrucks (A-Druck) in Abhängigkeit von den gemessenen Größen (ΣV, HList),

gekennzeichnet durch folgende weitere Schritte:

d) aus den gemessenen Werten des eingespeisten Luftvolumens ($\Sigma V$) und des Luftdrucks (HList) in der Hauptluftleitung (HL) werden von einer Zugnachbildung (7) elektrische Signale erzeugt, die den zeitlichen Druckverlauf von mindestens dem Hauptluftleitungsdruck ($HL_m$) und dem Druck ($R_m$) in den Vorratsluftbehältern aufgrund vorgegebener Funktionen nachbilden;

e) aus den elektrischen Signalen ($HL_m$ und $R_m$), die mindestens den Hauptluftleitungsdruck und den Druck in den Vorratsluftbehältern nachbilden, aus einem vom Bedienorgan abgeleiteten Signal (UREF) und

aus gespeicherten Werten (AHL, AR), die einem angenommen Volumen der Hauptluftleitung und des Vorratsluftbehälters entsprechen, wird ein Signal (VSZUG) erzeugt, das dem während eines Lösevorganges noch nachzuspeisenden Luftvolumen entspricht,

f) aus dem Signal (VSZUG) des nachzuspeisenden Luftvolumens wird ein Korrekturwert (ÜBER) gebildet, der bestimmt, um welchen Betrag der zum Lösen eingestellte Vorsteuerdruck erhöht wird und

g) im Anschluß an einen Lösevorgang werden der Wert ($\Sigma V$) des gemessenen nachgespeisten Volumens und der Wert (VSZUG) des ermittelten nachzuspeisenden Volumens verglichen und bei Abweichung dieser Werte voneinander der Wert der gespeicherten Größen (AHL, AR) korrigiert.

2. Verfahren zur adaptiven Bremssteuerung nach Anspruch 1 dadurch gekennzeichnet, daß der in der elektronischen Zugnachbildung (7) ermittelte Druckverlauf des Hauptluftleitungsdruckes ($HL_m$) ausgehend von dem zu Beginn einer Bremsung vorhandenen Hauptluftleitungsdruck ($HL_{ist}$) zeitlinear (ggf. im Anschluß an eine sprunghafte Druckabsenkung) verringert wird, wobei die Steilheit dieses simulierten Druckabfalles von der gespeicherten Größe (AHL) abhängt und so gewählt ist, daß der simulierte Druckabfall ($HL_m$) zu Beginn eines Bremsvorganges flacher verläuft als der tatsächliche Druckabfall ($HL_{ist}$) und daß der simulierte Druckabfall ($HL_m$) der Maximalwert aus dem tatsächlichen Druckverlauf ($HL_{ist}$) und dem zeitlinear abfallenden Druckverlauf ist.

3. Verfahren zur adaptiven Bremssteuerung nach Anspruch 2. dadurch gekennzeichnet, daß der während eines Bremsvorganges erreichte Minimalwert ($HL_{min}$) des simulierten Druckverlaufes ($HL_m$) gespeichert wird.

4. Verfahren zur adaptiven Bremssteuerung nach Anspruch 3. dadurch gekennzeichnet, daß zur Ermittlung des simulierten Druckes ($R_m$) in den Vorratsluftbehältern ein zu Beginn der Bremsung gespeicherter Wert (UREFge) des Bremsanforderungssignales abzüglich des simulierten HL-Druckes ($HL_m$) und ggf. noch mit multiplikativen und additiven Korrekturwerten versehener Wert (($UREFge-HL_m$)$*3-0.4bar$) mit einem gespeicherten Wert verglichen wird, der dem maximal möglichen Druck ($C_{max}$) in den einzelnen Bremszylindern entspricht, wobei der kleinere dieser beiden verglichenen Werte ($C_{soll}$) über ein Zeitglied (23) mit vorgegebenem Gradienten erhöht wird und daß bei jeder Erhöhung dieses Wertes um einen ersten vorgegebenen Betrag der simulierte Vorratsluftbehälterdruck ($R_m$) um einen zweiten vorgegebenen Betrag verringert wird.

5. Verfahren zur adaptiven Bremssteuerung nach Anspruch 4. dadurch gekennzeichnet, daß der Minimalwert ($R_{min}$) des simulierten Vorratsluftbehälterdruckes ($R_m$) in einem Speicher (25) gespeichert wird.

6. Verfahren zur adaptiven Bremssteuerung nach einem oder mehreren der Ansprüche 2 bis 5, dadurch gekennzeichnet, daß bei einem Lösevorgang das in die Hauptluftleitung tatsächlich nachgespeiste Luftvolumen durch Messung eines Differenzdruckes (dp) an einer Strömungsblende in Zusammenwirken mit einer gespeicherten oder errechneten Eichkurve ermittelt wird, wobei ferner überprüft wird, ob das pro Zeiteinheit in die Hauptluftleitung nachgespeiste Luftvolumen (dV) größer als ein vorgegebener Mindestwert ($dV_{min}$) ist und daß in der elektronischen Zugnachbildung in Abhängigkeit von diesem Vergleich die pro Zeiteinheit nachgespeisten Luftvolumen (dV) in einem Summierer (28) aufsummiert werden.

7. Verfahren zur adaptiven Bremssteuerung nach Anspruch 6. dadurch gekennzeichnet, daß während eines Lösevorganges überprüft wird, ob der angeforderte Bremsdruck (UREF) und der simulierte Hauptluftleitungsdruck ($HL_m$) kleiner als der simulierte Vorratsluftbehälterdruck ($R_m$) sind, daß bei Erfüllung dieser Bedingung das pro Zeiteinheit nachgespeiste Luftvolumen (dV) mit einem vorgegebenen Wert gewichtet wird, der den gespeicherten Wert (AHL) für das angenommene Volumen der Hauptluftleitung entspricht, womit Inkremente (dHL) für den Anstieg des simulierten Hauptluftleitungsdruckes pro Zeiteinheit ermittelt werden und

daß bei Nichterfüllung der Bedingung ($HL_m < R_m$) die Werte des pro Zeiteinheit nachströmenden Luftvolumens (dV) mit zwei Gewichtungsfaktoren (AHL, AR) gewichtet werden, die in ihrer Gesamtsumme dem angenommenen Volumen der Hauptluftleitung und der Vorratsluftbehälter entsprechen, womit Inkrementwerte für den gemeinsamen Druckaufbau des Hauptluftleitungsdruckes und des Vorratsluftbehälterdruckes ermittelt werden.

8. Verfahren zur adaptiven Bremssteuerung nach einem oder mehreren der Ansprüche 1 bis 7, dadurch gekennzeichnet, daß bei einem Lösevorgang der aktuelle Wert des simulierten Hauptluftleitungsdruckes $(HL_m)$ von dem kleineren Wert aus dem Bremsanforderungssignal (UREF) und dem bei Bremsbeginn gespeicherten Bremsanforderungssignal (UREFge) subtrahiert wird (Subtrahierer 40), mit einem ersten konstanten Faktor multipliziert wird (41) und mit dem gespeicherten Wert (AHL) für das angenommene Volumen der Hauptluftleitung multipliziert wird (42), das in ähnlicher Weise die Differenz aus dem minimalen Bremsanforderungssignal und dem simulierten Vorratsluftbehälterdruck $(R_m)$ mit einem konstanten Faktor (Multiplizierer 43) und einem Faktor (Multiplizierer 44) multipliziert werden, wobei der letztere Faktor dem angenommenen Volumen der Vorratsluftbehälter (AR) entspricht und daß die beiden so ermittelten Produkte in einem Addierer (45) addiert werden zur Bildung des Wertes (VSZUG), der das noch nachzuspeisende Luftvolumen (VSZUG) repräsentiert.

9. Verfahren zur adaptiven Bremssteuerung nach Anspruch 8. dadurch gekennzeichnet, daß aus dem Wert (VSZUG) für das noch nachzuspeisende Luftvolumen mit einer vorgegebenen Funktion (46) zwei Grenzwerte (Ü1, Ü2) für die mögliche Drucküberhöhung während eines Lösevorganges ermittelt werden.

10. Verfahren zur adaptiven Bremssteuerung nach Anspruch 9. dadurch gekennzeichnet, daß die beim Lösen dem Vorsteuerdruck (UREF) zu überlagernde Drucküberhöhung mit einem ersten Gradienten zeitlinear ansteigend auf den oberen Grenzwert (Ü1) erhöht wird, daß dieser obere Grenzwert für eine vorgegebene Zeitdauer (tü) gehalten, anschließend mit einem zweiten Gradienten zeitlinear auf den unteren Grenzwert (u2) abgebaut und von dort mit einem dritten kleineren Gradienten auf den Wert Null abgebaut wird, wobei der dritte Gradient so klein gewählt ist, daß die Bremssteuerventile der einzelnen Wagen auf die dann auftretende Druckabsenkung nicht ansprechen.

11. Verfahren zur adaptiven Bremssteuerung nach Anspruch 10. dadurch gekennzeichnet, daß die vorgegebene Zeitdauer (tü) in Abhängigkeit von der Betätigung (Bremsstufe und Dauer des Anliegens der Bremsstufe) des Bremsbedienorganes bestimmt wird.

12. Verfahren zur adaptiven Bremssteuerung nach einem der Ansprüche 1 bis 11 dadurch gekennzeichnet, daß im Anschluß an einen beendeten Lösevorgang überprüft wird, ob die Differenz zwischen dem tatsächlich nachgespeisten Luftvolumen und dem ermittelten noch nachzuspeisenden Luftvolumen (VSZUG) gleich Null ist und daß bei Nichterfüllung dieser Bedingung in Abhängigkeit von dem Vorzeichen dieser Differenz korrigierte Werte $(V_{HL0.5}, V_{HL1.5}, V_{R0.5}, V_{R1.5}, V_{ZUG0.5}, V_{ZUG1.5})$ ermittelt werden, die in vorgegebenen Sprüngen bestimmen, welche Luftmenge zum Füllen bzw. Entlüften von vorgegebenen Anzahlen (0.5, 1,5) von HL- und/oder Vorratsluftbehälterabschnitten (HL- und/oder R-Blöcke) benötigt wird, um den eingesteuerten Druck (UREF) zu erreichen, daß diese korrigierten ermittelten Werte mit dem bei Beendigung des Läsevorganges ermittelten Wert (VSZUG) für das noch nachzuspeisende Volumen verglichen werden und in Abhängigkeit von diesem Vergleich die Werte (AHL und/oder AR) für das angenommene Volumen der Hauptluftleitung und/oder der Vorratsluftbehälter für den nächsten Brems- und Lösezyklus verändert werden.

13. Verfahren zur adaptiven Bremssteuerung nach Anspruch 12, dadurch gekennzeichnet, daß ein Alarmsignal erzeugt wird, wenn Änderungen der angenommenen Volumen von Hauptluftleitung und/oder Vorratsluftbehältern einen vorgegebenen Wert überschreiten.

14. Verfahren zur adaptiven Bremssteuerung nach einem oder mehreren der Ansprüche 1 bis 13, dadurch gekennzeichnet, daß im Anschluß an den Abbau der Drucküberhöhung (von Ü1 nach Ü2) ein Kontrolldruck $(dP_{kon})$ erzeugt wird, daß dieser Kontrolldruck mit dem gemessenen Druck $(d_p)$ im Nachspeisezweig für die Hauptluftleitung (HL) verglichen wird und dann ein Alarmsignal erzeugt wird, wenn der Kontrolldruck $(dP_{kon})$ für eine vorgegebene Zeitdauer kleiner als der gemessene Druck $(d_p)$ ist.

EP 0 526 482 B1

## Claims

1. Method for adaptive brake control for indirectly operating compressed-air brakes, which has an electropneumatic driver's brake valve with an operating member for the adjustment of a desired value (UREF) for the brake pressure, a main air line (HL), a relay valve connected thereto, several compressed-air storage tanks connected to the main air line (HL) and a first and a second measuring sensor, with the driver's brake valve generating a pilot pressure (A-pressure) for the relay valve, having the following steps:

    a) measurement of the air volume ($\Sigma V$) supplied into the main air line (HL) upon release of the brake;

    b) measurement of the air pressure ($HL_{actual}$) in the main air line (HL);

    c) modification of the pilot pressure (A-pressure) in dependence upon the measured variables ($\Sigma V$, $HL_{actual}$),

characterized by the following further steps:

    d) electrical signals are generated from the measured values of the supplied air volume ($\Sigma V$) and the air pressure ($HL_{actual}$) in the main air line (HL) by train simulation (7), which signals simulate the temporal pressure variation of at least the pressure ($HL_m$) of the main air line and the pressure ($R_m$) in the compressed-air storage tanks on the basis of specified functions;

    e) a signal (VSZUG) is generated from the electrical signals ($HL_m$ and $R_m$) which simulate at least the pressure of the main air line and the pressure in the compressed-air storage tanks, from a signal (UREF) derived from the operating member and from stored values (AHL, AR) which correspond to an estimated volume of the main air line and of the compressed-air storage tank, which signal (VSZUG) corresponds to the air volume still to be subsequently supplied during a release procedure,

    f) a correction value (OVER) is formed from the signal (VSZUG) of the air volume to be subsequently supplied, which value determines by what amount the pilot pressure adjusted for the release is increased and

    g) subsequently to a release procedure the value ($\Sigma V$) of the measured subsequently supplied volume and the value (VSZUG) of the ascertained volume to be subsequently supplied are compared and with a deviation of these values from one another the value of the stored variables (AHL, AR) is corrected.

2. Method for adaptive brake control according to claim 1, characterized in that the pressure variation of the pressure ($HL_m$) of the main air line, ascertained in the electronic train simulation (7), proceeding from the pressure ($HL_{actual}$) of the main air line present at the beginning of a braking, is reduced in a time-linear manner (perhaps subsequently to a sudden pressure drop), with the steepness of this simulated pressure drop depending on the stored variable (AHL) and being selected such that the simulated pressure drop ($HL_m$) at the beginning of a braking procedure proceeds more evenly than the actual pressure drop ($HL_{actual}$) and in that the simulated pressure drop ($HL_m$) is the maximum value of the actual pressure variation ($HL_{actual}$) and the pressure variation dropping in a time-linear manner.

3. Method for adaptive brake control according to claim 2, characterized in that the minimum value ($HL_{min}$) of the simulated pressure variation ($HL_m$) achieved during a braking procedure is stored.

4. Method for adaptive brake control according to claim 3, characterized in that to ascertain the simulated pressure ($R_m$) in the compressed-air storage tanks a value (UREFge) of the brake requirement signal stored at the beginning of the braking less the simulated HL pressure ($HL_m$) and perhaps the value ($(UREFge-HL_m)*3 -0.4bar$) also provided with multiplicative and additive correction values is compared with a stored value which corresponds to the maximum possible pressure ($C_{max}$) in the individual brake cylinders, with the smaller of these two compared values ($C_{desired}$) being increased by way of a time element (23) with specified gradient and in that with each increase of this value by a first specified amount the simulated pressure ($R_m$) of the compressed-air storage tank is reduced by a second specified amount.

5. Method for adaptive brake control according to claim 4, characterized in that the minimum value ($R_{min}$) of the simulated pressure ($R_m$) of the compressed-air storage tank is stored in a memory (25).

6. Method for adaptive brake control according to one or more of claims 2 to 5, characterized in that upon a release procedure the air volume actually supplied subsequently into the main air line is ascertained by measuring a differential pressure (dp) at a flow aperture in cooperation with a stored or calculated calibration curve, wherein, moreover, it is examined whether the air volume (dV) subsequently supplied per time unit into the main air line is greater than a specified minimum value ($dV_{min}$) and in that in the electronic train simulation in dependence upon this comparison the air volume (dV) subsequently sup-

14

plied per time unit is added up in an adder (28).

7. Method for adaptive brake control according to claim 6, characterized in that during a release procedure it is examined whether the required brake pressure (UREF) and the simulated pressure ($HL_m$) of the main air line are lower than the simulated pressure ($R_m$) of the compressed-air storage tank, in that upon fulfilment of this condition the air volume (dV) subsequently supplied per time unit is weighted with a specified value which corresponds to the stored value (AHL) for the estimated volume of the main air line, whereby increments (dHL) for the rise of the simulated pressure of the main air line per time unit are ascertained and in that if the condition ($HL_m < R_m$) is not fulfilled, the values of the air volume (dV) subsequently flowing per time unit are weighted with two weighting factors (AHL, AR) which in their total sum correspond to the estimated volume of the main air line and the compressed-air storage tanks, whereby increment values for the common pressure build-up of the pressure of the main air line and the pressure of the compressed-air storage tank are ascertained.

8. Method for adaptive brake control according to one or more of claims 1 to 7, characterized in that upon a release procedure the actual value of the simulated pressure ($HL_m$) of the main air line is subtracted from the smaller value of the brake requirement signal (UREF) and the brake requirement signal (UREFge) stored at the beginning of the braking (subtracter 40), is multiplied (41) with a first constant factor and is multiplied (42) with the stored value (AHL) for the estimated volume of the main air line, in that in a similar manner the difference of the minimum brake requirement signal and the simulated pressure ($R_m$) of the compressed-air storage tank are multiplied with a constant factor (multiplier 43) and a factor (multiplier 44), with the latter factor corresponding to the estimated volume of the compressed-air storage tanks (AR) and in that the two products ascertained in this way are added in an adder (45) for the formation of the value (VSZUG) which represents the air volume (VSZUG) still to be subsequently supplied.

9. Method for adaptive brake control according to claim 8, characterized in that with a specified function (46) two limiting values (Ü1, Ü2) for the possible pressure increase during a release procedure are ascertained from the value (VSZUG) for the air volume still to be subsequently supplied.

10. Method for adaptive brake control according to claim 9, characterized in that the pressure increase to be superimposed on the pilot pressure (UREF) upon release is increased with a first gradient rising in a time-linear manner to the upper limiting value (Ü1), in that this upper limiting value is held for a specified duration (tü), is subsequently reduced with a second gradient in a time-linear manner to the lower limiting value (u2) and from here is reduced with a third smaller gradient to the value zero, with the third gradient being selected to be so small that the brake control valves of the individual vehicles do not respond to the pressure drop which then occurs.

11. Method for adaptive brake control according to claim 10, characterized in that the specified duration (tü) is determined in dependence upon the actuation (brake stage and duration of the application of the brake stage) of the brake operating member.

12. Method for adaptive brake control according to one of claims 1 to 11, characterized in that subsequent to a finished release procedure it is examined whether the difference between the actually subsequently supplied air volume and the ascertained air volume still to be subsequently supplied (VSZUG) equals zero and in that if this condition is not fulfilled, in dependence upon the sign of this difference, corrected values ($V_{HL0.5}$, $V_{HL1.5}$, $V_{R0.5}$, $V_{R1.5}$, $V_{ZUG0.5}$, $V_{ZUG1.5}$) are ascertained which determine in specified jumps what air quantity is necessary for filling or emptying specified numbers (0.5, 1.5) of HL and/or compressed-air storage tank portions (HL blocks and/or R blocks) in order to achieve the input pressure (UREF), in that these corrected ascertained values are compared with the value (VSZUG) ascertained at the end of the release procedure for the volume still to be supplied subsequently and in dependence upon this comparison the values (AHL and/or AR) for the estimated volume of the main air line and/or the compressed-air storage tanks are changed for the next braking and release cycle.

13. Method for adaptive brake control according to claim 12, characterized in that an alarm signal is generated when changes in the estimated volume of the main air line and/or compressed-air storage tanks exceed a specified value.

14. Method for adaptive brake control according to one or more of claims 1 to 13, characterized in that subsequent to the reduction of the pressure increase (from Ü1 to Ü2) a control pressure ($dP_{kon}$) is generated,

in that this control pressure is compared with the measured pressure ($d_p$) in the branch for subsequent supply for the main air line (HL) and then an alarm signal is generated if the control pressure ($dP_{kon}$) is smaller than the measured pressure ($d_p$) for a specified duration.

**Revendications**

1. Procédé de commande adaptative de freinage pour des freins à air comprimé à action indirecte, qui possèdent un robinet de frein électropneumatique du mécanicien comportant un organe de commande pour le réglage d'une valeur de consigne (UREF) pour la pression de freinage, une conduite d'air principale (HL), une soupape relais raccordée à cette conduite, plusieurs réservoirs d'air raccordés à la conduite d'air principale (HL), ainsi que des premier et second capteurs de mesure, le robinet de frein du mécanicien produisant une pression de commande pilote (pression A) pour la soupape relais, comportant les phases opératoires suivantes :

   a) la mesure du volume d'air ($\Sigma V$) introduit dans la conduite d'air principale (HL) lors du desserrage du frein;

   b) la mesure de l'air comprimé (HList) dans la conduite d'air principale (HL);

   c) la modification de la pression de commande pilote (pression A) en fonction des grandeurs mesurées ($\Sigma V$, HList),

   caractérisé par les autres phases opératoires suivantes :

   d) à partir des valeurs mesurées du volume d'air introduit ($\Sigma V$) et de la pression d'air (HList) dans la conduite d'air principale (HL) sont produits, par une unité de simulation du train (7), des signaux électriques, qui simulent la variation dans le temps au moins de la pression ($HL_m$) dans la conduite d'air principale et de la pression ($R_m$) dans les réservoirs d'air, sur la base de fonctions prédéterminées;

   e) à partir des signaux électriques ($HL_m$ et $R_m$), qui simulent au moins la pression dans la conduite d'air principale et la pression dans les réservoirs d'air, à partir d'un signal (UREF) dérivé de l'organe de commande et

   à partir des valeurs mémorisées (AHL, AR), qui correspondent à un volume supposé de la conduite d'air principale et des réservoirs d'air, est formé un signal (VSZUG), qui correspond au volume d'air devant être encore introduit en supplément pendant un processus de desserrage,

   f) à partir du signal (VSZUG) du volume d'air devant être introduit en supplément est formée une valeur de correction (ÜBER), qui détermine de quelle valeur la pression de commande pilote réglée pour le desserrage est accrue, et

   g) à la suite d'une opération de desserrage la valeur ($\Sigma V$) du volume mesuré devant être introduit en supplément et la valeur (VSZUG) du volume déterminé devant être introduit en supplément sont comparées et, dans le cas d'un écart entre ces valeurs, la valeur des grandeurs mémorisées (AHL, AR) est corrigée.

2. Procédé de commande adaptative de freinage suivant la revendication 1, caractérisé par le fait que la variation de pression, déterminée dans l'unité de simulation électronique du train (7), de la pression ($HL_m$) dans la conduite d'air principale est réduite d'une manière linéaire dans le temps (éventuellement à la suite d'une réduction brusque de la pression) à partir d'une pression ($HL_{ist}$) dans la conduite d'air principale, qui est présente au début d'un freinage, la pente de cette chute de pression simulée dépendant de la grandeur (AHL) mémorisée et étant choisie de manière que la chute de pression simulée ($HL_m$) d'une opération de freinage est plus plate que la chute de pression effective $HL_{ist}$ et que la chute de pression simulée ($HL_m$) est la valeur maximale obtenue à partir de la variation de pression effective ($HL_{ist}$) et de la variation de pression qui chute selon une variation linéaire dans le temps.

3. Procédé de commande adaptative de freinage suivant la revendication 2, caractérisé par le fait que la valeur minimale ($HL_{min}$), obtenue pendant une opération de freinage, de la variation de pression simulée ($HL_m$) est mémorisée.

4. Procédé de commande adaptative de freinage suivant la revendication 3, caractérisé par le fait que pour la détermination de la pression simulée ($R_m$) dans les réservoirs d'air, une valeur (UREFge) du signal de demande de freinage, mémorisée au début du freinage, et diminuée de la pression HL simulée ($HL_m$) et en outre éventuellement d'une valeur affectée de valeurs de correction multiplicatives et additives, ((UREFge-$HL_m$)*3-0,4 bar), est comparée à une valeur mémorisée, qui correspond à la pression maximale possible ($C_{max}$) présente dans les différents cylindres de frein, la plus petite des deux valeurs

comparées ($C_{soll}$) étant accrue par l'intermédiaire d'un circuit de temporisation (23) avec un gradient prédéterminé, et que lors de chaque accroissement de cette valeur, d'un premier montant prédéterminé, la pression simulée ($R_m$) dans les réservoirs d'air est réduite d'un second montant prédéterminé.

5. Procédé de commande adaptative de freinage suivant la revendication 4, caractérisé par le fait que la valeur minimale ($R_{min}$) de la pression simulée ($R_m$) dans les réservoirs d'air est mémorisée dans une mémoire (25).

6. Procédé de commande adaptative de freinage suivant une ou plusieurs des revendications 2 à 5, caractérisé par le fait que lors d'une opération de desserrage, le volume d'air, introduit effectivement en supplément dans la conduite d'air principale, est déterminé par mesure d'une pression différentielle (dp) au niveau d'un diaphragme d'écoulement en coopération avec une courbe d'étalonnage mémorisée ou calculée, tandis qu'en outre un contrôle est exécuté pour savoir si le volume d'air (dB) introduit en supplément par une unité de temps dans la conduite d'air principale, est ou non supérieur à une valeur minimale prédéterminée ($dV_{min}$), et que dans l'unité de simulation électronique de traction, les volumes d'air (dB) introduits en supplément par unité de temps sont additionnés dans un additionneur (28), en fonction de cette comparaison.

7. Procédé de commande adaptative de freinage suivant la revendication 6, caractérisé par le fait que pendant une opération de desserrage, un contrôle est exécuté pour savoir si la pression de freinage demandée (UREF) et la pression simulée ($HL_m$) dans la conduite d'air principale sont inférieures à la pression simulée ($R_m$) dans le réservoir d'air, que lorsque cette condition est satisfaite, le volume d'air (dB) introduit en supplément par unité de temps est pondéré par une valeur prédéterminée, qui correspond à la valeur mémorisée (AHL) pour le volume supposé de la conduite d'air principale, ce qui permet de déterminer des incréments (dHL) pour l'accroissement de la pression simulée dans la conduite d'air principale par unité de temps, et que lorsque la condition n'est pas satisfaire ($HL_m < R_m$), les valeurs du volume d'air (dB), qui est introduit en supplément par unité de temps, sont pondérées par deux facteurs de pondération (AHL, AR), dont la somme totale correspond au volume supposé de la conduite d'air principale et des réservoirs d'air, ce qui permet de déterminer des valeurs d'incrémentation pour l'établissement commun de la pression de la conduite d'air principale et de la pression des réservoirs d'air.

8. Procédé de commande adaptative de freinage suivant une ou plusieurs des revendications 1 à 7, caractérisé par le fait que lors d'une opération de desserrage, la valeur actuelle de la pression simulée ($HL_m$) dans la conduite d'air principale est soustraite de la valeur plus faible tirée du signal de demande de freinage (UREF) et est soustraite (soustracteur 40) du signal de demande de freinage (UREFge) mémorisée au début du freinage, est multipliée (41) par un premier facteur constant et est multipliée (42) par la valeur mémorisée (AHL) pour le volume supposé de la conduite d'air principale, de façon analogue la différence entre le signal minimum de demande de freinage et la pression simulée ($R_m$) des réservoirs d'air est multipliée par un facteur constant (multiplicateur 43) et par un facteur (multiplicateur 44), le dernier facteur correspondant au volume supposé des réservoirs d'air (AR), et que les deux produits ainsi obtenus sont additionnés dans un additionneur (45) pour former la valeur (VSZUG), qui représente le volume d'air (VSZUG) devant être introduit en supplément.

9. Procédé de commande adaptative de freinage suivant la revendication 8, caractérisé par le fait que deux valeurs limites (Ü1, Ü2) pour l'accroissement possible de pression pendant une opération de desserrage sont déterminées à partir de la valeur (VSZUG) pour le volume d'air devant être encore introduit en supplément, sur la base d'une fonction prédéterminée (46).

10. Procédé de commande adaptative de freinage suivant la revendication 9, caractérisé par le fait que l'accroissement de pression, qui doit être superposé à la pression de commande pilote (UREF) lors du desserrage, est accru selon un accroissement linéaire dans le temps jusqu'à la valeur limite supérieure (Ü1) avec un premier gradient, que cette valeur limite supérieure est maintenue pendant une durée prédéterminée (tü), puis est réduite d'une manière linéaire dans le temps avec un second gradient jusqu'à la valeur limite inférieure (u2) et, à partir de là, est réduite jusqu'à la valeur nulle avec un troisième gradient plus faible, le troisième gradient étant choisi suffisamment faible pour que les soupapes de commande de frein des différentes voitures ne répondent pas à la réduction de pression qui apparaît alors.

11. Procédé de commande adaptative de freinage suivant la revendication 10, caractérisé par le fait que la durée prédéterminée (tü) est déterminée en fonction de l'actionnement (palier de freinage et durée de l'activation dans le palier de freinage) de l'organe de commande de freinage.

12. Procédé de commande adaptative de freinage suivant l'une des revendications 1 à 11, caractérisé par le fait qu'à la suite d'une opération terminée de desserrage, on vérifie si la différence entre le volume d'air introduit effectivement de façon supplémentaire et le volume d'air déterminé (VSZUG), devant être encore introduit en supplément, est nulle et que, dans le cas où cette condition n'est pas satisfaite, des valeurs corrigées en fonction du signe de cette différence ($V_{HL0.5}$, $V_{HL1.5}$, $V_{R0.5}$, $V_{R1.5}$, $V_{ZUGO.5}$, $V_{ZUG1.5}$) sont déterminées, ces valeurs fixant, conformément à des sauts prédéterminés, quelle quantité d'air est nécessaire pour le remplissage ou le vidage de nombres prédéterminés (0,5, 1,5) de sections (HL) et/ou de réservoirs d'air (blocs HL et/ou R) pour obtenir la pression commandée (UREF), que ces valeurs déterminées et corrigées sont comparées à la valeur (VSZUG), déterminées à la fin de l'opération de desserrage, pour le volume devant être encore introduit en supplément, et qu'en fonction de cette comparaison, les valeurs (AHL et/ou AR) pour le volume supposé de la conduite d'air principale et/ou des réservoirs d'air sont modifiées pour le cycle immédiatement suivant de freinage et de desserrage.

13. Procédé de commande adaptative de freinage suivant la revendication 12, caractérisé par le fait qu'un signal d'alarme est produit lorsque des modifications des volumes supposés de la conduite d'air principale et/ou des réservoirs d'air dépassent une valeur prédéterminée.

14. Procédé pour la commande adaptative de freinage suivant une ou plusieurs des revendications 1 à 13, caractérisé par le fait qu'à la suite de la suppression de l'accroissement de pression (de Ü1 vers Ü2), une pression de contrôle ($dP_{kon}$) est produite, que cette pression de contrôle est comparée à la pression mesurée ($d_P$) dans la branche d'alimentation complémentaire pour la conduite d'air principale (HL), et qu'un signal d'alarme est produit lorsque la pression de contrôle ($dp_{kon}$) est inférieure, pendant une durée prédéterminée, à la pression mesurée ($d_p$).

Fig. 1

EP 0 526 482 B1

Fig. 2

Fig. 3

Fig. 4

EP 0 526 482 B1

Fig. 5

Fig. 6

Fig. 7

Fig. 8

Fig. 8a

Fig. 9

Fig. 10

HLm

UREFge
UREF

Rm

39 min

40 δHL

41 KVHL

43 KVR

42 AHL

44 AR

45

46 Ü1 ΔVzug

47 KÜ1

VSZUG

Ü2

Ü1

Fig. 11

Start

Bremsen ? — n

j

Ansprungverhalten
durchführen — n

j

Ansprungverhalten
von HL-, R-(und
C- ) Drücken

HL-Druckabbau
durchführen
HL = f ( t, UREF,
HL-Messung,
HL-Block )
- - - - - - - -
C-Druckaufbau
durchführen
C = f ( t, $\Delta$ HL )

C > C$_{MAX}$ — n

j

Begrenzen von C

R-Druckabbau
durchführen
R = f ( t, $\Delta$ C )

① 

Lösen ? — n

j

Nur
HL-Leitung
auffüllen
? — n

j

Auffüllen
von HL :
HL = f ( t, $\Delta$V )

Auffüllen
von HL und R :
HL = f ( t, $\Delta$V )
R = f ( t, $\Delta$V )

Abbau von C :
C = f ( t, $\Delta$ HL )

C < Cmin — n

j

Initialisierung
von Cm
Ansprungverhalten

Berechnen des
Luftvolumens das
für Lösevorgang
noch benötig wird
VSZUG = f ( HL, R,
        UREF, UREFge,
HL-Block, R-Block )

Berechnen der
Überhöhungen
Ü1 und Ü2

Ü1, Ü2 = f ( VSZUG)

②

③

Fig. 12a

Fig. 12b

Start

Umrechnen von
Differenzdruck
in Volumen

$\Delta V = f(\Delta t,\ \text{Eich-}$
kurve, HB, $\Delta p$)

glätten und
aufsummieren

Ende
Volumenintegration

Fig. 13

Start

Lernprozess durchführen ?

n → ③

j

Berechnen von Luftvolumina :

1/2 HL-Block :
$$V_{HL\,0.5} = f\,(\,UREF\ od.\ UREF_{ge},\ HL_{min})$$

3/2 HL-Blöcke :
$$V_{HL\,1.5} = 3 \cdot V_{HL\,0.5}$$

1/2 R-Block :
$$V_{R\,0.5} = f\,(\,UREF\ od.\ UREF_{ge},\ R_{min})$$

3/2 R-Blöcke :
$$V_{R\,1.5} = 3 \cdot V_{R\,0.5}$$

1/2 Zug-Block :
$$V_{Z\,0.5} = V_{HL\,0.5} + V_{R\,0.5}$$

3/2 Zug-Blöcke :
$$V_{Z\,1.5} = V_{HL\,1.5} + V_{R\,1.5}$$

VSZUG>0

n →

NVSZUG = 1
VSZUG=-VSZUG

j

NVSZUG = -1

①

Fig. 14a

Fig. 14b

Fig. 14c

```
                    ┌─────────────┐
                    │    Start    │
                    └──────┬──────┘
                           │
                    ╱──────┴──────╲
                   ╱    Anpassen    ╲          n
                  ⟨ Startwert  für    ⟩──────────────────────┐
                   ╲Differenzdruckkontrolle╱                 │
                    ╲──────┬──────╱                          │
                           │  ?                              ▼
                           │ j                        ╱──────────╲
                           │                         ╱  Kontrolle  ╲      n
                           │                        ⟨  durchführen   ⟩─────────┐
                           │                         ╲       ?      ╱          │
                           │                          ╲──────┬─────╱           │
                           │                                 │ j               │
                    ┌──────┴──────┐                  ┌───────┴────────┐        │
                    │ DPkon =     │                  │ Abbauen von DPkon│       │
                    │ f(UREFge,   │                  │ über Zeitglied: │        │
                    │ HLmin, Rmin)│                  │ DPkon = f(DPkon,t)│      │
                    └──────┬──────┘                  └───────┬────────┘        │
                           │                                 │                 │
                           │                          ╱──────┴─────╲           │
                           │                         ╱     dp        ╲    n     │
                           │                        ⟨      >          ⟩─────────┤
                           │                         ╲    DPkon      ╱          │
                           │                          ╲──────┬─────╱           │
                           │                                 │ j               │
                           │                          ╱──────┴─────╲           │
                           │                         ╱  Zulässige    ╲   n      │
                           │                        ⟨ Dauer Überschritten⟩──────┤
                           │                         ╲       ?      ╱           │
                           │                          ╲──────┬─────╱           │
                           │                                 │ j               │
                           │                          ┌──────┴──────┐          │
                           │                          │ Zugtrennung │          │
                           │                          │   erkannt   │          │
                           │                          └──────┬──────┘          │
                           │                                 │                 │
                           └─────────────┬───────────────────┘─────────────────┘
                                         │
                                  ┌──────┴──────┐
                                  │    Ende     │
                                  └─────────────┘
```

Fig. 15